# EUROPEAN PATENT APPLICATION

(11) **EP 4 718 767 A1**
(43) Date of publication of application: **01.04.2026**
(21) Application number: 23943049.9
(22) Date of filing: 30.06.2023
(51) Int. Cl.: H04L 9/00

(54) **HOMOMORPHIC TASK MANAGEMENT METHOD, KEY MANAGEMENT METHOD, CIPHERTEXT STORAGE MANAGEMENT METHOD, AND DEVICE**

(71) Applicant: Huawei Technologies Co., Ltd., Shenzhen, Guangdong 518129 (CN)
(72) Inventor: WANG, Wenhui, Shenzhen, Guangdong 518129 (CN); LIU, Fei, Shenzhen, Guangdong 518129 (CN); SONG, Yurong, Shenzhen, Guangdong 518129 (CN)
(74) Representative: Isarpatent
(86) International application number: PCT/CN2023/105428
(87) International publication number: WO 2025/000558

(57) **Abstract**

This application relates to the field of communication technologies, and in particular, to a homomorphic task management method, a key management method, a ciphertext storage management method, and an apparatus, to apply homomorphic encryption to a communication network and support management of a homomorphic task in the communication network. The method includes: receiving a homomorphic task request, where the homomorphic task request includes a homomorphic task output type; and sending one or more pieces of homomorphic task configuration information to N homomorphic enabling units based on the homomorphic task request, where each piece of task configuration information includes one or more homomorphic task participant types of at least one of the N homomorphic enabling units; the homomorphic task participant type includes any one of a homomorphic encryption party, a homomorphic computation party, or a homomorphic decryption party; and the N homomorphic enabling units are configured to implement a homomorphic task of the homomorphic task output type.

## Description

### TECHNICAL FIELD

This application relates to the field of communication technologies, and in particular, to a homomorphic task management method, a key management method, a ciphertext storage management method, and an apparatus.

### BACKGROUND

With convergence of communication, perception, and artificial intelligence, perception has emerged as an inherent capability of future communication networks, providing a large amount of data for intelligent applications. The network serves as both a data producer and provider, delivering trusted data services for various intelligent applications. Additionally, the network also acts as a network data consumer, leveraging the data-driven intelligent applications to improve network performance and operation efficiency.

In addition, with social progress and increasing awareness of data ownership, requirements on data privacy protection have become increasingly stringent. How to fully explore and realize data value and efficiently utilize communication resources and computation resources in communication networks while meeting high security and privacy requirements, and how to provide end-to-end data privacy and security protection technologies while implementing various new network capabilities (such as endogenous intelligence and ubiquitous perception) and new services (such as immersive extended reality (extended reality, XR), digital twins, meta universe, and the like) are problems to be urgently resolved.

### SUMMARY

This application provides a homomorphic task management method, a key management method, a ciphertext storage management method, and an apparatus, to apply homomorphic encryption to a communication network, support management of a homomorphic task in the communication network, and provide a privacy computation capability for the communication network.

According to a first aspect, an embodiment of this application provides a homomorphic task management method. The homomorphic task management method may be performed by a homomorphic task management unit. The method includes: receiving a homomorphic task request, where the homomorphic task request includes a homomorphic task output type; and sending one or more pieces of task configuration information to N homomorphic enabling units based on the homomorphic task request, where each piece of task configuration information includes one or more homomorphic task participant types of at least one of the N homomorphic enabling units; the homomorphic task participant type includes any one of a homomorphic encryption party, a homomorphic computation party, and a homomorphic decryption party; and the N homomorphic enabling units are configured to implement a homomorphic task corresponding to the homomorphic task output type, where N is an integer greater than or equal to 1.

The homomorphic enabling unit may be a terminal device, an access network device, a core network element, an independent node, an application layer function node, or the like; or a chip, a circuit, a software module, or the like corresponding to the devices (or network elements, or the like).

The homomorphic task management unit may be separately deployed as a node in a communication network, or a function of the homomorphic task management unit may be deployed on an existing node in the communication network. This is not limited in this application. According to the foregoing method, the homomorphic task management unit may manage a terminal device, an access network device, a core network element, an independent node, an application layer function node, or another node serving as a homomorphic enabling unit in the communication network; and allocate, based on the homomorphic task request, a homomorphic task participant type to the terminal device, the access network device, the core network element, the independent node, the application layer function node, or the another node serving as a homomorphic enabling unit in the communication network, to apply the homomorphic encryption to the communication network, and support implementing the homomorphic encryption in the communication network.

In a possible design, task configuration information sent to at least one of the N homomorphic enabling units serving as a homomorphic computation party further includes a homomorphic computation algorithm identifier and a homomorphic encryption algorithm identifier, and the homomorphic computation algorithm identifier may be determined based on the homomorphic task output type, or may be determined based on the homomorphic computation algorithm identifier carried in the homomorphic task request when the homomorphic task request carries the homomorphic computation algorithm identifier.

According to the foregoing design, the homomorphic computation algorithm identifier and the homomorphic encryption algorithm identifier may be configured for the homomorphic computation party, so that the homomorphic computation party performs homomorphic computation according to a homomorphic computation algorithm and a homomorphic encryption algorithm (for example, configures or selects a computation circuit according to the homomorphic computation algorithm and the homomorphic encryption algorithm to perform the homomorphic computation), and supports the implementation of the homomorphic task.

In a possible design, before sending the one or more pieces of task configuration information to the N homomorphic enabling units, the method further includes: selecting, based on homomorphic capability information of M homomorphic enabling units and the homomorphic task request, the N homomorphic enabling units from the M homomorphic enabling units, where M is an integer greater than or equal to N, where homomorphic capability information of any one of the M homomorphic enabling units includes a homomorphic encryption algorithm identifier and/or a homomorphic computation algorithm identifier supported by the homomorphic enabling unit.

Optionally, the homomorphic capability information of the homomorphic enabling unit may further include one or more of an identifier, a type, a homomorphic encryption capability level, a homomorphic encryption security level, a homomorphic encryption enabling identifier, a homomorphic decryption enabling identifier, and a homomorphic computation enabling identifier of the homomorphic enabling unit. The homomorphic task request further includes one or more of a homomorphic task type, a homomorphic task quality requirement, a data user parameter, a quantity of data users, a quantity of data providers, and a data provider parameter.

According to the foregoing design, the homomorphic enabling unit may be selected based on the homomorphic capability information of each homomorphic enabling unit and a homomorphic task requirement carried in the homomorphic task request, to help improve reliability of the homomorphic task.

In a possible design, the M homomorphic enabling units include a first homomorphic enabling unit, and the method further includes: receiving homomorphic capability information from the first homomorphic enabling unit; and generating a homomorphic capability profile of the first homomorphic enabling unit based on the homomorphic capability information of the first homomorphic enabling unit.

The homomorphic capability profile may be stored locally in the homomorphic task management unit. In addition to a part or all of the homomorphic capability information of the first homomorphic enabling unit, the homomorphic capability profile may further include information about a homomorphic task that the homomorphic enabling unit currently participates in, for example, a task identifier of the homomorphic task that the homomorphic enabling unit currently participates in, a homomorphic task participant type of the homomorphic task that the homomorphic enabling unit participates in, and the like.

Optionally, before receiving the homomorphic capability information from the first homomorphic enabling unit, the method further includes: sending a homomorphic capability information reporting request to the first homomorphic enabling unit, where the homomorphic capability information reporting request is used for requesting the homomorphic capability information of the first homomorphic enabling unit.

According to the foregoing design, the homomorphic capability information of the homomorphic enabling unit may be obtained in a manner of actively reporting by the homomorphic enabling unit, or in a manner of sending a reporting request to the homomorphic enabling unit to request reporting by the homomorphic enabling unit, to support the homomorphic task management unit in obtaining the homomorphic capability information of the homomorphic enabling unit in different manners.

In a possible design, the method further includes: generating a homomorphic task profile based on the homomorphic task request and the one or more pieces of task configuration information.

In this embodiment of this application, the homomorphic task profile may include a homomorphic task-related parameter, for example, one or more of information such as a homomorphic task index, a homomorphic task type, a homomorphic encryption algorithm identifier, a homomorphic computation algorithm identifier, or the like; and may further include information about a homomorphic encryption party, a homomorphic computation party, a homomorphic decryption party, a data user, or the like. For example, the homomorphic encryption party may include information such as a quantity of homomorphic encryption parties and a parameter of each homomorphic encryption party.

According to the foregoing design, an encrypted homomorphic task profile can be generated based on the homomorphic task request, a homomorphic task configuration (or scheduling) result, and the like, to record and manage information about the homomorphic task.

In a possible design, after a secure channel is established to a second homomorphic task management unit, the method further includes: forwarding or broadcasting the homomorphic task request to at least one second homomorphic task management unit.

Optionally, the method further includes: requesting homomorphic capability information of a third homomorphic enabling unit from the second homomorphic task management unit; and receiving a homomorphic capability information profile of the third homomorphic enabling unit responded by the second homomorphic task management unit, where the third homomorphic enabling unit is located in a management domain of the second homomorphic task management unit.

Optionally, the method further includes: sending a homomorphic task status query request to the second homomorphic task management unit, where the homomorphic task status query request includes an identifier of a to-be-queried homomorphic task; and receiving a homomorphic task status query response from the second homomorphic task management unit, where the homomorphic task status query response includes information about whether the to-be-queried homomorphic task ends, and the to-be-queried homomorphic task is managed by the second homomorphic task management unit.

Optionally, when the homomorphic enabling unit participating in the homomorphic task further relates to the second homomorphic task management unit, the method further includes: sending a first key derivation material to the second homomorphic task management unit; receiving a homomorphic task key from the second homomorphic task management unit, where the homomorphic task key is derived based on the first key derivation material and a second key derivation material from the second homomorphic task management unit; and delivering the homomorphic task key to the N homomorphic enabling units that receive task configuration information.

According to the foregoing design, when the homomorphic task management units are deployed across domains, at layers, on a plurality of nodes, or the like, the homomorphic task request can be forwarded or broadcast between the homomorphic task management units.

In a possible design, the method further includes: sending a homomorphic task key request to a key management unit, where the homomorphic task key request is used for requesting to deliver a homomorphic task key to the at least one of the N homomorphic enabling units, and the homomorphic task key request includes one or more homomorphic task participant types of each of the N homomorphic enabling units and a homomorphic encryption algorithm identifier used in the homomorphic task.

According to the foregoing design, the key management unit can learn of homomorphic task configuration (or scheduling) information, complete delivery of the homomorphic task key, and support the implementation of the homomorphic task.

In a possible design, the method further includes: sending ciphertext sending task configuration information to a ciphertext data storage management unit, where the ciphertext sending task configuration information includes a ciphertext data identifier and an identifier of the at least one homomorphic enabling unit serving as the homomorphic computation party, to enable the ciphertext data storage management unit to send a stored ciphertext corresponding to the ciphertext data identifier to the at least one homomorphic enabling unit serving as the homomorphic computation party, where the ciphertext data identifier identifies a ciphertext needed in the homomorphic task. Optionally, the ciphertext is a symmetric ciphertext, an asymmetric ciphertext, or a homomorphic ciphertext.

According to the foregoing design, the ciphertext data storage management unit may store the ciphertext of the homomorphic enabling unit and the like, perform configuration or scheduling based on a ciphertext sending task, and send the stored ciphertext to the homomorphic computation party of one or more homomorphic tasks, to help improve utilization of the ciphertext.

In a possible design, before sending the one or more pieces of task configuration information to the N homomorphic enabling units, or before sending the ciphertext sending task configuration information to the ciphertext data storage management unit, the method further includes: determining that the ciphertext is valid, where that the ciphertext is valid includes that a storage lifecycle of the ciphertext has not ended and/or an encryption key corresponding to the ciphertext has not expired.

In a possible design, the method further includes: sending a ciphertext query request to the ciphertext data storage management unit, where the ciphertext query request is used for requesting to query for validity of the ciphertext; and receiving a ciphertext query response from the ciphertext data storage management unit, where the ciphertext query response includes whether the ciphertext is valid.

According to the foregoing design, before configuring the homomorphic task or the ciphertext sending task, the homomorphic task management unit may further confirm the validity of the ciphertext, to ensure that the homomorphic task can be executed.

According to a second aspect, an embodiment of this application provides a key management method. The method may be performed by a key management unit. The method includes: receiving a homomorphic task key request from a homomorphic task management unit, where the homomorphic task key request is used for requesting to deliver a homomorphic task key to at least one of N homomorphic enabling units; the homomorphic task request includes one or more homomorphic task participant types of each of the N homomorphic enabling units participating in a homomorphic task and a homomorphic encryption algorithm identifier used in the homomorphic task; and the homomorphic task participant type includes any one of a homomorphic encryption party, a homomorphic computation party, or a homomorphic decryption party; and sending a homomorphic encryption key to at least one of the N homomorphic enabling units serving as a homomorphic encryption party, sending a homomorphic computation key to at least one of the N homomorphic enabling units serving as a homomorphic computation party, and sending a homomorphic decryption key to at least one of the N homomorphic enabling units serving as a homomorphic decryption party, where the homomorphic encryption key, the homomorphic computation key, and the homomorphic decryption key are derived based on a key generator corresponding to the homomorphic encryption algorithm identifier, and N is an integer greater than or equal to 1.

In this embodiment of this application, the key generator may be an algorithm, a function, an algorithm procedure, or the like for key derivation, and key generators corresponding to different homomorphic encryption algorithm identifiers may be different. In addition, the key management unit may be separately deployed as a node in a communication network, or a function of the key management unit may be deployed on an existing node in the communication network, or may be integrated with the homomorphic task management unit according to the first aspect. This is not limited in this application.

In a possible design, the method further includes: sending a homomorphic task key derivation request to a key exchange party, where the homomorphic task key derivation request includes an identifier of the at least one homomorphic enabling unit participating in the homomorphic task, a public parameter used for deriving a homomorphic task key, and the homomorphic encryption algorithm identifier; and receiving a homomorphic task key from the key exchange party, where the homomorphic task key includes the homomorphic encryption key, the homomorphic computation key, and the homomorphic decryption key, and the homomorphic task key is derived by the key exchange party based on a key material associated with the at least one homomorphic enabling unit participating in the homomorphic task, the public parameter used for deriving the homomorphic task key, and the key generator corresponding to the homomorphic encryption algorithm identifier.

In a possible design, the method further includes: sending a key information obtaining request to the key exchange party, where the key information obtaining request includes the identifier of the at least one homomorphic enabling unit participating in the homomorphic task; receiving key information from the key exchange party, where the key information includes the key material of the at least one homomorphic enabling unit participating in the homomorphic task; and deriving the homomorphic task key based on the key information, a public parameter used for deriving a homomorphic task key, and the key generator corresponding to the homomorphic encryption algorithm identifier, where the homomorphic task key includes the homomorphic encryption key, the homomorphic computation key, and the homomorphic decryption key.

According to a third aspect, an embodiment of this application provides a key management method. The method may be performed by a key management unit. The method includes: receiving a homomorphic task key request from a homomorphic task management unit, where the homomorphic task key request is used for requesting to deliver a homomorphic task key to at least one of N homomorphic enabling units; the homomorphic task request includes one or more homomorphic task participant types of each of the N homomorphic enabling units participating in a homomorphic task and a homomorphic encryption algorithm identifier used in the homomorphic task; and the homomorphic task participant type includes any one of an encryption party, a homomorphic computation party, or a decryption party; and when at least one of the N homomorphic enabling units serving as an encryption party uses non-homomorphic encryption, sending a homomorphic encryption key and a homomorphic computation key to at least one of the N homomorphic enabling units serving as a homomorphic computation party, and sending a homomorphic decryption key to at least one of the N homomorphic enabling units serving as a decryption party, where the homomorphic computation key includes a first switching key; the first switching key is a homomorphic ciphertext obtained by performing homomorphic encryption on a non-homomorphic decryption key corresponding to a non-homomorphic ciphertext, and is used by the at least one homomorphic enabling unit serving as the homomorphic computation party to perform homomorphic computation and non-homomorphic decryption on a ciphertext obtained by performing homomorphic encryption again on the non-homomorphic ciphertext by using the homomorphic encryption key, to obtain the homomorphic ciphertext; and the homomorphic encryption key, the homomorphic computation key, and the homomorphic decryption key are derived based on a key generator corresponding to the homomorphic encryption algorithm identifier, where the non-homomorphic encryption includes symmetric encryption or asymmetric encryption that does not support a homomorphic feature, the non-homomorphic decryption includes symmetric decryption or asymmetric decryption that does not support a homomorphic feature, the non-homomorphic ciphertext is a ciphertext obtained through the non-homomorphic encryption, and N is an integer greater than or equal to 1.

In this embodiment of this application, the key generator may be an algorithm, a function, an algorithm procedure, or the like for key derivation, and key generators corresponding to different homomorphic encryption algorithm identifiers may be different. In addition, the key management unit may be separately deployed as a node in a communication network, or a function of the key management unit may be deployed on an existing node in the communication network, or may be integrated with the homomorphic task management unit according to the first aspect. This is not limited in this application.

According to the foregoing method, the homomorphic computation may be performed on the ciphertext obtained through the non-homomorphic encryption, and the homomorphic ciphertext obtained through the homomorphic encryption may be output to the decryption party, to expand an application scope of the homomorphic task, and improve utilization of the ciphertext.

In a possible design, the method further includes: obtaining, by using a key exchange party, a non-homomorphic decryption key corresponding to the non-homomorphic encryption; and deriving the homomorphic task key based on the non-homomorphic decryption key, a public parameter used for deriving the homomorphic task key, and the key generator corresponding to the homomorphic encryption algorithm identifier, where the homomorphic task key includes the homomorphic encryption key, the homomorphic computation key, and the homomorphic decryption key.

According to a fourth aspect, an embodiment of this application provides a key management method. The method may be performed by a key management unit. The method includes: receiving a homomorphic task key request from a homomorphic task management unit, where the homomorphic task key request is used for requesting to deliver a homomorphic task key to at least one of N homomorphic enabling units; the homomorphic task request includes one or more homomorphic task participant types of each of the N homomorphic enabling units participating in a homomorphic task and a homomorphic encryption algorithm identifier used in the homomorphic task; and the homomorphic task participant type includes any one of a homomorphic encryption party, a homomorphic computation party, or a homomorphic decryption party; and when at least one of the N homomorphic enabling units serving as an encryption party uses non-homomorphic encryption, and at least one of the N homomorphic enabling units serving as a decryption party uses non-homomorphic decryption, sending a homomorphic encryption key, a homomorphic computation key, and a second switching key to at least one of the N homomorphic enabling units serving as a homomorphic computation party, where the homomorphic computation key includes a first switching key; the first switching key is a homomorphic ciphertext obtained by performing homomorphic encryption on a non-homomorphic decryption key corresponding to a non-homomorphic ciphertext, and is used by the at least one homomorphic enabling unit serving as the homomorphic computation party to perform homomorphic computation and non-homomorphic decryption on a ciphertext obtained by performing homomorphic encryption again on the non-homomorphic ciphertext by using the homomorphic encryption key, to obtain the homomorphic ciphertext; and the second switching key is used by the at least one homomorphic enabling unit serving as the homomorphic computation party to switch a homomorphic ciphertext obtained through homomorphic computation to a non-homomorphic ciphertext obtained through the non-homomorphic encryption, where the non-homomorphic encryption includes symmetric encryption or asymmetric encryption that does not support a homomorphic feature, the non-homomorphic decryption includes symmetric decryption or asymmetric decryption that does not support a homomorphic feature, the non-homomorphic ciphertext is a ciphertext obtained through the non-homomorphic encryption, and the homomorphic encryption key, the homomorphic computation key, and the second switching key are derived based on a key generator corresponding to the homomorphic encryption algorithm identifier.

In this embodiment of this application, the key generator may be an algorithm, a function, an algorithm procedure, or the like for key derivation, and key generators corresponding to different homomorphic encryption algorithm identifiers may be different. In addition, the key management unit may be separately deployed as a node in a communication network, or a function of the key management unit may be deployed on an existing node in the communication network, or may be integrated with the homomorphic task management unit according to the first aspect. This is not limited in this application.

According to the foregoing method, the homomorphic computation may be performed on the ciphertext obtained through the non-homomorphic encryption, and the non-homomorphic ciphertext obtained through the non-homomorphic encryption may be output to the decryption party, to expand an application scope of the homomorphic task, and improve utilization of the ciphertext.

In a possible design, the non-homomorphic decryption key is sent to the at least one homomorphic enabling unit serving as the decryption party.

In a possible design, the method further includes: obtaining, by using a key exchange party, a non-homomorphic encryption key and a non-homomorphic decryption key corresponding to the non-homomorphic encryption; and deriving the homomorphic task key based on the non-homomorphic encryption key, the non-homomorphic decryption key, a public parameter used for deriving the homomorphic task key, and the key generator corresponding to the homomorphic encryption algorithm identifier, where the homomorphic task key includes the homomorphic encryption key, the homomorphic computation key, and the second switching key.

In a possible design, the homomorphic task key is derived and delivered based on a granularity of the homomorphic task key, and the granularity of the homomorphic task key is determined through agreement with the key exchange party.

In a possible design, the granularity of the homomorphic task key is a task level, a user level, or a sub-domain level.

According to the foregoing design, the key management unit and the key exchange party are supported to agree the key granularity, and deliver the homomorphic task key based on the agreed key granularity, to help meet privacy encryption requirements of different granularities.

According to a fifth aspect, an embodiment of this application provides a ciphertext storage management method. The method may be performed by a ciphertext data storage management unit. The method includes: receiving ciphertext sending task configuration information from a homomorphic task management unit, where the ciphertext sending task configuration information includes a ciphertext data identifier; and sending, based on the ciphertext sending task configuration information, a stored ciphertext corresponding to the ciphertext data identifier to the at least one homomorphic enabling unit serving as the homomorphic computation party. Optionally, the ciphertext is a symmetric ciphertext, an asymmetric ciphertext, or a homomorphic ciphertext.

The ciphertext data storage management unit may be separately deployed as a node in a communication network, or a function of the ciphertext data storage management unit may be deployed on an existing node in the communication network, or may be integrated with the homomorphic task management unit and/or the key management unit. This is not limited in this application.

According to the foregoing method, the ciphertext data storage management unit may store the ciphertext of the homomorphic enabling unit, to help the homomorphic computation party participating in the homomorphic task quickly provide the needed ciphertext of the homomorphic enabling unit, support providing a same ciphertext for homomorphic computation parties participating in different homomorphic tasks to perform the homomorphic computation, and improve reusability of the ciphertext.

In a possible design, the method further includes: receiving a ciphertext query request from the homomorphic task management unit, where the ciphertext query request is used for requesting to query for validity of the ciphertext; and sending a ciphertext query response to the homomorphic task management unit, where the ciphertext query response includes whether the ciphertext is valid, and that the ciphertext is valid includes that a storage lifecycle of the ciphertext has not ended and/or an encryption key corresponding to the ciphertext has not expired.

According to the foregoing design, the validity of the ciphertext provided for the homomorphic computation method can be ensured, and the homomorphic task can be reliably performed.

In a possible design, the ciphertext includes a ciphertext from a second homomorphic enabling unit, and the method further includes: receiving the ciphertext and a storage lifecycle from the second homomorphic enabling unit; and storing the ciphertext based on the storage lifecycle.

In a possible design, the ciphertext includes a ciphertext from a second homomorphic enabling unit, and the method further includes: receiving the ciphertext from the second homomorphic enabling unit; setting a storage lifecycle of the ciphertext when a permission for setting the storage lifecycle of the ciphertext is obtained from the second homomorphic enabling unit; and storing the ciphertext based on the storage lifecycle.

According to the foregoing design, the ciphertext data storage management unit may store the ciphertext based on the storage lifecycle of the ciphertext, to avoid that an amount of stored ciphertext data is excessively large.

In a possible design, the stored ciphertext from the homomorphic enabling unit includes a ciphertext encrypted by using a first encryption key, and the method further includes: receiving indication information from a key management unit, where the indication information indicates that the first encryption key is leaked or invalid; and deleting the ciphertext encrypted by using the first encryption key.

According to the foregoing design, the ciphertext data storage management unit may delete the ciphertext by using the encryption key when the encryption key is leaked, to ensure security of the stored ciphertext.

In a possible design, a storage domain for storing a ciphertext generated by at least one homomorphic enabling unit serving as the homomorphic encryption party is divided based on one or more of the following: a homomorphic enabling unit to which the ciphertext belongs, an encryption key corresponding to the ciphertext, a network layer associated with the ciphertext, a network slice type associated with the ciphertext, and a security context associated with the ciphertext.

According to the foregoing design, ciphertext storage domains may be obtained through division based on one or more of the homomorphic enabling unit to which the ciphertext belongs, the encryption key corresponding to the ciphertext, the network layer associated with the ciphertext, the network slice type associated with the ciphertext, the security context associated with the ciphertext, and the like, to help improve ciphertext storage or search efficiency.

According to a sixth aspect, an embodiment of this application provides a communication apparatus. The apparatus has a function of implementing the method according to any one of the first aspect to the fifth aspect. The function may be implemented by hardware, or may be implemented by hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method according to any one of the first aspect to the fifth aspect.

According to a seventh aspect, an embodiment of this application provides a communication apparatus. The communication apparatus includes an interface circuit and a processor, and the processor and the interface circuit are coupled to each other. The processor is configured to implement the method according to any one of the first aspect to the fifth aspect by using a logic circuit or executing instructions. The interface circuit is configured to receive a signal from another communication apparatus other than the communication apparatus and transmit the signal to the processor, or send a signal from the processor to another communication apparatus other than the communication apparatus. It may be understood that, the interface circuit may be a transceiver, a transceiver machine, a radio transceiver, or an input/output interface.

Optionally, the communication apparatus may further include a memory, configured to store instructions executed by the processor, store input data required by the processor to run the instructions, or store data generated after the processor runs the instructions. The memory may be a physically independent unit, or may be coupled to the processor, or the processor includes the memory.

According to an eighth aspect, an embodiment of this application provides a computer-readable storage medium. The computer-readable storage medium stores a computer program or instructions. When the computer program or the instructions are executed by a processor, the method according to any one of the first aspect to the fifth aspect may be implemented.

According to a ninth aspect, an embodiment of this application further provides a computer program product, including a computer program or instructions. When the computer program or the instructions are executed by a processor, the method according to any one of the first aspect to the fifth aspect may be implemented.

According to a tenth aspect, an embodiment of this application further provides a chip system. The chip system includes a processor. The processor is configured to be coupled to a memory. The memory is configured to store a program or instructions. When the program or the instructions are executed by the processor, the method according to any one of the first aspect to the fifth aspect may be implemented.

According to an eleventh aspect, an embodiment of this application further provides a communication system. The communication system includes a homomorphic task management unit and at least one homomorphic enabling unit that communicates with the homomorphic task management function network element; and
the homomorphic task management unit is configured to implement the method according to the first aspect.

In a possible implementation, the communication system further includes a key management unit and/or a ciphertext data storage management unit, where
the key management unit is configured to implement the method according to any one of the second aspect to the fourth aspect; and
the ciphertext data storage management unit is configured to implement the method according to the fifth aspect.

For technical effects that can be achieved in the second aspect to the tenth aspect, refer to the technical effects that can be achieved in the first aspect. Details are not described herein again.

### BRIEF DESCRIPTION OF DRAWINGS

FIG. 1A, FIG. 1B, FIG. 1C, and FIG. 1D are diagrams of homomorphic encryption algorithms according to an embodiment of this application;
FIG. 2 is diagram of a homomorphic encryption scheme according to an embodiment of this application;
FIG. 3 is a diagram of a possible and non-limiting communication system architecture according to an embodiment of this application;
FIG. 4 is a diagram of performing a homomorphic task in a communication network according to an embodiment of this application;
FIG. 5 is a diagram 1 of a homomorphic task management method according to an embodiment of this application;
FIG. 6 is a functional diagram of a homomorphic task management unit according to an embodiment of this application;
FIG. 7 is a diagram 2 of a homomorphic task management procedure according to an embodiment of this application;
FIG. 8 is a diagram of a homomorphic capability management procedure according to an embodiment of this application;
FIG. 9 is a diagram of exchange between a key management unit and another key exchange party according to an embodiment of this application;
FIG. 10 is a diagram 1 of a derivation procedure of a homomorphic task key according to an embodiment of this application;
FIG. 11 is a diagram 2 of a derivation procedure of a homomorphic task key according to an embodiment of this application;
FIG. 12 is a diagram of an end-to-end procedure of a homomorphic task according to an embodiment of this application;
FIG. 13 is a functional diagram of a ciphertext data storage management unit according to an embodiment of this application;
FIG. 14 is a diagram of a ciphertext storage lifecycle management procedure according to an embodiment of this application;
FIG. 15 is a diagram of two-level storage domain division according to an embodiment of this application;
FIG. 16 is a diagram of a key invalidation procedure according to an embodiment of this application;
FIG. 17 is a diagram of a ciphertext validity query procedure according to an embodiment of this application;
FIG. 18A-1 to FIG. 18B-2 are diagrams of a homomorphic task procedure according to an embodiment of this application;
FIG. 19 is a diagram of a structure of a homomorphic encryption control function network element according to an embodiment of this application;
FIG. 20 is a diagram 1 of exchange between homomorphic encryption control function network elements according to an embodiment of this application;
FIG. 21 is a diagram 1 of exchange between homomorphic encryption control function network elements according to an embodiment of this application;
FIG. 22 is a diagram 1 of exchange between homomorphic encryption control function network elements according to an embodiment of this application;
FIG. 23 is a diagram 1 of exchange between homomorphic encryption control function network elements according to an embodiment of this application;
FIG. 24 is a diagram 1 of a structure of a communication apparatus according to an embodiment of this application; and
FIG. 25 is a diagram 2 of a structure of a communication apparatus according to an embodiment of this application.

### DESCRIPTION OF EMBODIMENTS

This application provides a homomorphic task management method, a key management method, a ciphertext storage management method, and an apparatus. The method and the apparatus are based on a same technical concept. The method and the apparatus have similar principles for resolving problems. Therefore, for implementations of the apparatus and the method, refer to each other. Details are not repeated herein.

For ease of understanding by a person skilled in the art, before embodiments of this application are described, some terms in this application are first described.

Homomorphic encryption (homomorphic encryption, HE) is a technology enabling computation and processing of data ciphertext without exposing data plaintext. HE focuses on privacy protection computation and implements data value extraction while providing privacy protection. HE is built upon basic encryption by adding a homomorphic computation function to a ciphertext. The homomorphic encryption allows for direct computation on the encrypted ciphertext, and for the ciphertext-based computation result, yields a decrypted computation result that is consistent with a plaintext-based computation result. The homomorphic encryption can be classified into partially homomorphic encryption, somewhat homomorphic encryption, and fully homomorphic encryption. The partially homomorphic encryption supports only homomorphic addition or homomorphic multiplication. The somewhat homomorphic encryption allows for a limited number of arbitrary homomorphic operations, where the homomorphic operation may be homomorphic addition or homomorphic multiplication. The fully homomorphic encryption supports an unlimited number of homomorphic operations. The fully homomorphic encryption may be asymmetric public key encryption or symmetric encryption, provided that the ciphertext has an algebraic structure.

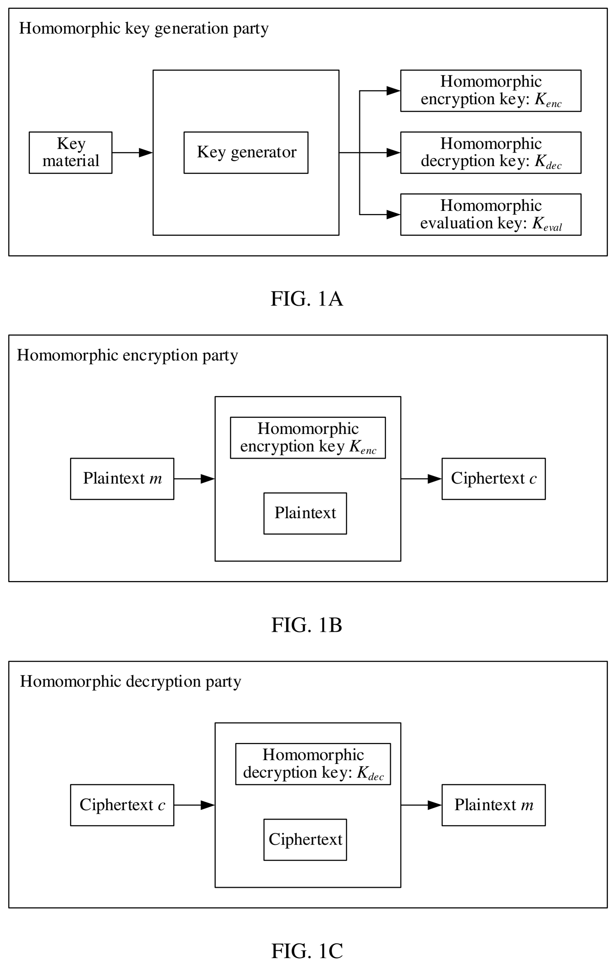

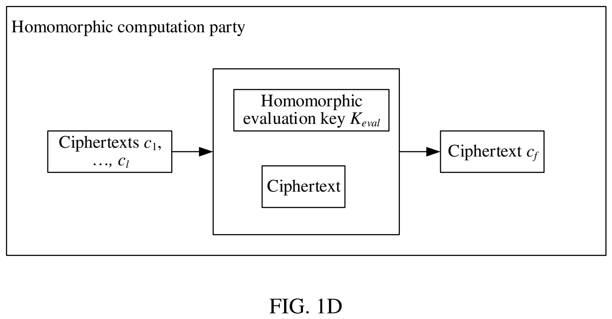

Homomorphic encryption HE = (HE.Keygen, HE.Enc, HE.Dec, HE.Eval) is formed by four algorithms, where HE.Keygen indicates key generation (Key generation), HE.Enc indicates homomorphic encryption (homomorphic encryption), HE.Dec indicates homomorphic decryption (homomorphic decryption), and HE.Eval indicates homomorphic evaluation (homomorphic evaluation), also referred to as homomorphic computation. The following uses an asymmetric encryption scheme as an example to describe the homomorphic encryption, where n is a security parameter..
(1) Key generation: (*pk, evk, sk*) ← *HE.Keygen*(1*ⁿ*). Refer to FIG. 1A. A homomorphic key generation party (HEKG for short) may input a key material (for example, 1*ⁿ*) into a key generator, and output a public key (public key, pk) as a homomorphic encryption key: *K_{enc} = pk*; output an evaluation key (evaluation key, evk) as a homomorphic evaluation key *Kₑᵥₐₗ*, which may also be referred to as a homomorphic computation key; and output a secret key (secret key, sk) as a homomorphic decryption key *K_{dec} = sk.*
(2) Homomorphic encryption: *c* ← *HE.Encₚₖ*(*m*)*.* Refer to FIG. 1B. A homomorphic encryption party (HEenc for short) may use a homomorphic encryption key *K_{enc} = pk* to encrypt a single-bit plaintext (plaintext) message *m* ∈ {0,1} into a ciphertext (ciphertext) c.
(3) Homomorphic decryption: *m* ← *HE.Decₛₖ*(*c*). Refer to FIG. 1C. A homomorphic decryption party (HEdec for short) may use a homomorphic decryption key *K_{dec} = sk* to decrypt a ciphertext *c* to restore the ciphertext to a plaintext message *m* ∈ {0,1}.
(4) Homomorphic evaluation (or homomorphic computation): *c_{f}* ← *HE.Evalₑᵥₖ*(*f,c*₁, *... , cₗ*), which may also be referred to as homomorphic computation. Refer to FIG. 1D. Based on an input ciphertext *c*₁, ... , *cₗ* and a homomorphic computation key *Kₑᵥₐₗ = evk,* a homomorphic computation party (HEcalc, or HEeval for short) may execute a homomorphic computation function *f* : {0,1}*^{l}* → {0,1} on the ciphertext, to obtain an output ciphertext *c_{f}* of homomorphic computation.

In the formula, *f* represents an arithmetic circuit with addition and multiplication gates on a GF(2) (where GF represents a finite field, and GF is short for Galois field (Galois Field)). Generally, the homomorphic computation HE.Eval may be decomposed into a plurality of basic operators, that is, homomorphic addition *c_{add}* ← *HE.Addₑᵥₖ*(*c*₁*, c*₂) and homomorphic multiplication *cₘᵤₗₜ* ← *HE.Multₑᵥₖ*(*c*₁*, c*₂)*.*

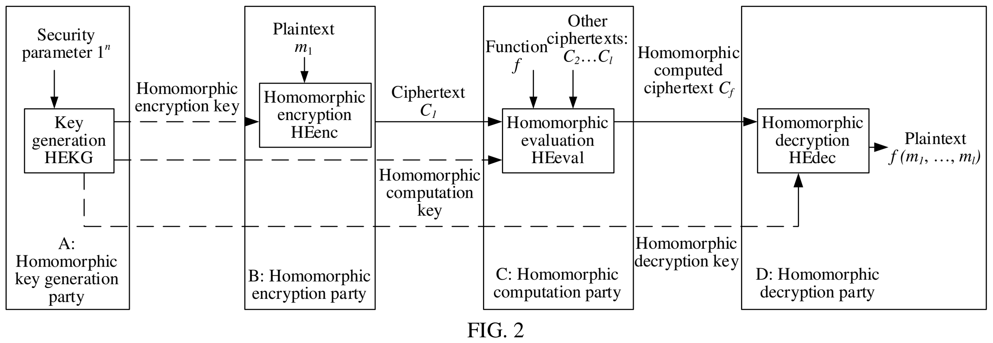

The entire homomorphic encryption scheme HE = (HE.Keygen, HE.Enc, HE.Dec, HE.Eval) is shown in FIG. 2, and a ciphertext-based computation result obtained through decryption is equivalent to a plaintext-based computation result, where *Dec_{K_{dec}}* (*f*(*Enc_{K_{enc}}*(*m*₁), *Enc_{K_{enc}}*(*m*₂), *..., Enc_{K_{enc}}*(*mₗ*))) *= f*(*m*₁, ... , *mₗ*). A homomorphic key generation party A generates a homomorphic encryption key *K_{enc},* a homomorphic computation key *Kₑᵥₐₗ,* and a homomorphic decryption key *K_{dec},* and needs to separately distribute the key to a homomorphic encryption party B, a homomorphic computation party C, and a homomorphic decryption party D.

In a homomorphic task, a plurality of homomorphic encryption parties may encrypt data from different sources, a plurality of homomorphic computation parties may execute a homomorphic computation circuit, or there is a single-hop or multi-hop homomorphic computation party. A homomorphic task may have a plurality of homomorphic decryption parties. A decryption result may be sent to a plurality of data users. Based on key deployment, the homomorphic decryption party and the data user may be the same entity or different entities. The fully homomorphic encryption may be asymmetric public key encryption or symmetric encryption, provided that the ciphertext has an algebraic structure. Homomorphic encryption keys of a plurality of homomorphic encryption parties in a homomorphic task may be the same or different. The homomorphic computation key may include a bootstrapping key (bootstrapping key, BSK) and a key switching key (key switching key, KSK). The BSK may be used for homomorphic computation on a decryption circuit in a ciphertext state to reduce noise. The KSK may be used for switching, after the ciphertext computation, a ciphertext product into a new ciphertext having a same dimension as an original ciphertext, and eliminate a cross item of a corresponding key, to reduce a problem of an increasing ciphertext size caused by ciphertext multiplication.

In addition, it should be noted that "and/or" in this application describes an association relationship between associated objects and represents that three relationships may exist. For example, A and/or B may represent the following three cases: Only A exists, both A and B exist, and only B exists. The character "/" generally indicates an "or" relationship between the associated objects.

In this application, "at least one" means one or more, and "a plurality of" means two or more. In description of this application, terms such as "first" and "second" are merely used for a purpose of distinguishing and description, and shall not be understood as an indication or implication of relative importance or an indication or implication of an order.

The foregoing describes some terms in embodiments of this application. The following describes a communication system architecture to which embodiments of this application are applicable.

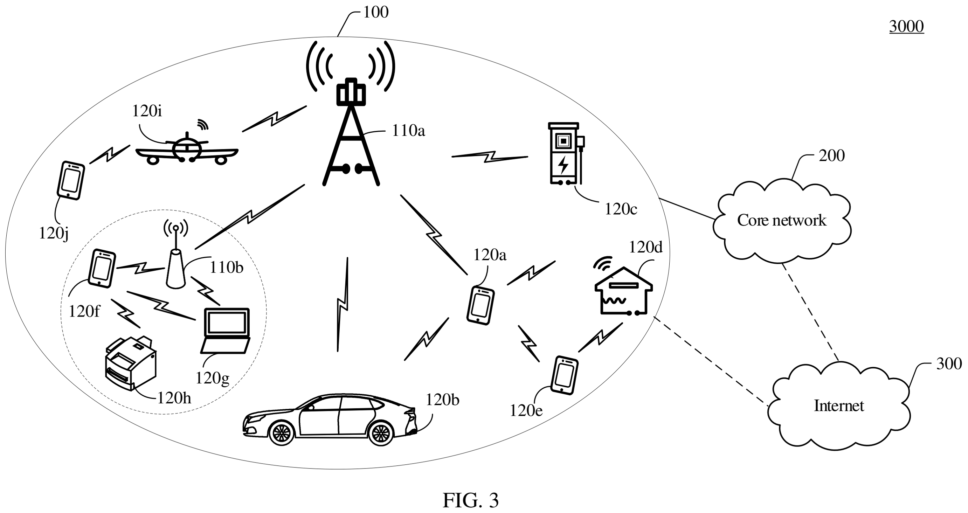

FIG. 3 shows a possible and non-limiting communication system architecture to which an embodiment of this application is applicable. As shown in FIG. 3, the communication system 3000 includes a radio access network (radio access network, RAN) 100, and a core network (core network, CN) 200. Optionally, the communication system 3000 may further include an internet 300. The RAN 100 includes at least one network device (for example, 110a and 110b in FIG. 3, collectively referred to as 110) and at least one terminal device (for example, 120a to 120j in FIG. 3, collectively referred to as 120). The RAN 100 may further include another RAN node, for example, a wireless relay device, a wireless backhaul device (not shown in FIG. 3), and/or the like. The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or an evolved system after 5G (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates two or more of the foregoing systems.

It may be understood that, FIG. 3 shows only a possible communication system architecture to which embodiments of this application may be applicable. In another possible scenario, the communication system architecture may alternatively include another device.

The network device 110 is a node in the radio access network (radio access network, RAN), and may also be referred to as an access network device or a RAN node (or device). The network device 110 is configured to help the terminal device implement wireless access. A plurality of network devices 110 in the communication system 3000 may be nodes of a same type, or may be nodes of different types. In some scenarios, roles of the network device 110 and the terminal device 120 are relative. For example, the network element 120i in FIG. 3 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, the network elements 110a and 110b in FIG. 3 may be understood as communication apparatuses with a base station function, and the network elements 120a to 120j may be understood as communication apparatuses with a terminal device function.

In a possible scenario, the network device may be a base station (base station), an evolved base station (evolved NodeB, eNodeB), a transmission reception point (transmission reception point, TRP), a transmission point (transmission point, TP), a next-generation NodeB (next-generation NodeB, gNB), a next-generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 3), a micro base station or an indoor base station (for example, 110b in FIG. 3), a relay node or a donor node, or a radio controller in a CRAN scenario. The network device may alternatively be a device with a base station function in device to device (device to device, D2D) communication, internet of vehicles communication, unmanned aerial vehicle communication, or machine communication. Optionally, the network device may alternatively be a server, a wearable device, a vehicle, an in-vehicle device, or the like. For example, an access network device in a vehicle to everything (vehicle to everything, V2X) technology may be a road side unit (road side unit, RSU).

In another possible scenario, a plurality of network devices collaborate to assist the terminal device in implementing wireless access, and different network devices separately implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the network device may be a CU node, a DU node, or a device including a CU node and a DU node. In addition, the CU may be classified as a network device in an access network RAN, or the CU may be classified as a network device in a core network CN. This is not limited herein.

A form of the network device is not limited in embodiments of this application. An apparatus for implementing a function of a network device may be a network device, or may be an apparatus, for example, a chip system, that can enable a network device to implement the function. The apparatus may be mounted in the network device or used in conjunction with the network device.

The terminal device 120 may also be referred to as a terminal, user equipment (user equipment, UE), a mobile station (mobile station, MS), a mobile terminal (mobile terminal, MT), or the like; or is a device that provides a user with voice or data connectivity; or may be an internet of things device. For example, the terminal device includes a hand-held device, an in-vehicle device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, a pedometer, or the like), an in-vehicle device (for example, a car, a bicycle, an electric vehicle, an airplane, a ship, a train, a high-speed train, or the like), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, an electricity meter, or the like), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device with a terminal function. For example, the terminal device may alternatively be a device that has a terminal function in D2D communication.

A device form of the terminal device is not limited in embodiments of this application. An apparatus for implementing a function of a terminal device may be a terminal device, or may be an apparatus, for example, a chip system, that can enable a terminal device to implement the function. The apparatus may be mounted in the terminal device or used in conjunction with the terminal device. In embodiments of this application, the chip system may include a chip, or may include a chip and another discrete component.

Each network element or device in the communication system (which may also be referred to as a communication network) shown in FIG. 3 may have a homomorphic encryption capability. Therefore, in this embodiment of this application, it may be considered that the homomorphic task corresponding to homomorphic encryption is supported in the communication network, to provide a privacy computation capability for the communication network.

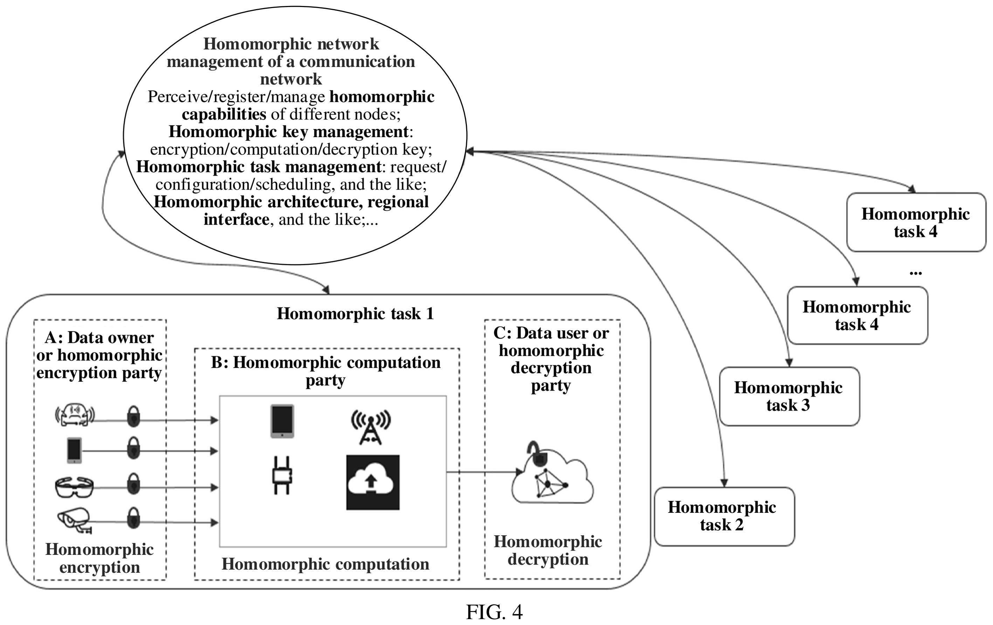

FIG. 4 is an example of performing a homomorphic task in a communication network according to this application. The communication network may also be referred to as a telecommunication network. The communication network may be deployed as cells, and each cell may have thousands of terminal devices wirelessly accessing a serving cell of the terminal devices. In FIG. 4, a terminal device like an intelligent vehicle configured with an on-board unit (on-board unit, OBU), a smartphone, a VR/AR device, a smart camera, or the like may have a homomorphic encryption capability. When privacy protection is required, homomorphic encryption may be performed on generated sensitive data; then the data is transmitted to another terminal node, a road side unit (road side unit, RSU), a base station, a function network element (network function, NF) in a core network (the function network element in the core network is referred to as an NF for short below), a cloud provider, or the like in a communication network, and homomorphic computation on a ciphertext is performed; and finally ciphertext data obtained through computation is transmitted to a data user for homomorphic decryption.

There may be a plurality of homomorphic tasks (for example, homomorphic tasks 1 to 4 in FIG. 4) in the entire communication network. Based on the (fully) homomorphic encryption technology, the communication network may provide privacy protection and privacy computation services for a high-security and high-sensitive service. How to perceive, orchestrate, schedule, and manage the homomorphic tasks in the communication network? How to perceive, register, and manage homomorphic capabilities of different nodes? Homomorphic tasks relates to new problems of optimization of a homomorphic task management procedure, and problems of management and distribution of encryption/computation/decryption keys or key parameters related to a homomorphic task. The problems are not resolved in an existing communication network. In addition, the network device and the core network in the homomorphic task may further need to perceive in real time a communication resource status and a computation resource status of a homomorphic participant in a homomorphic encryption service, and perform collaborative management and control on the communication resource and the computation resource, to ensure that a homomorphic privacy protection service that meets quality of service (quality of service, QoS) requirements such as an ultra-low latency, high data security privacy, and sustainability is provided in a dynamic and complex wireless network environment. Therefore, it is worth thinking to apply homomorphic encryption to the communication network and manage the homomorphic task in the communication network.

In view of this, this application provides a homomorphic task management scheme, a key management scheme, and a ciphertext storage management scheme, to support application of homomorphic encryption to a communication network, meet a requirement for homomorphic task management in the communication network, and provide a privacy computation capability for the communication network. The following describes in detail embodiments of this application with reference to accompanying drawings.

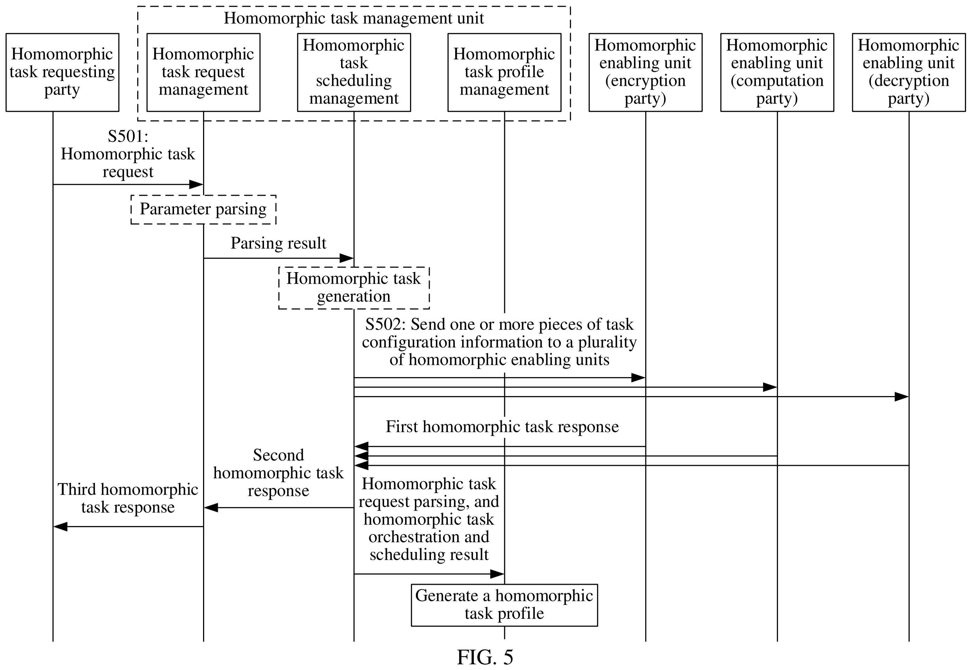

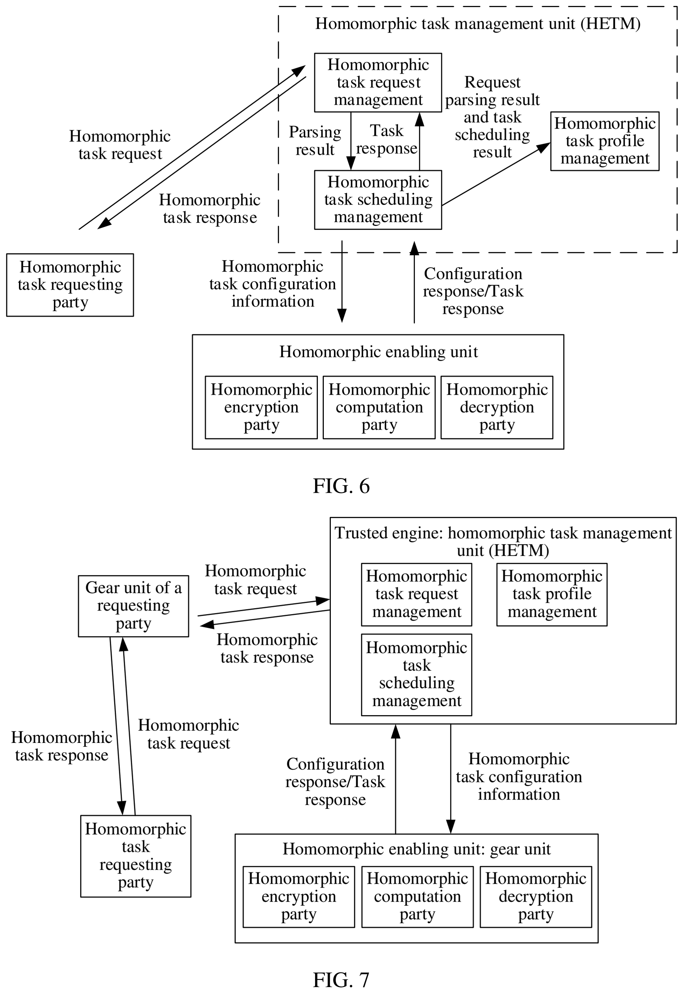

FIG. 5 is a diagram of a homomorphic task management method according to an embodiment of this application. The method may be performed by a homomorphic task management unit (where the homomorphic task management unit may also be referred to as a homomorphic encryption task management (homomorphic encryption task management, HETM) unit). Refer to FIG. 6. The homomorphic task management unit may have one or more of functions such as homomorphic task request management, homomorphic task scheduling management, and homomorphic task profile (profile) management.

The homomorphic task request management function may be used for managing all homomorphic task requests, receiving the homomorphic task requests from a homomorphic task requesting party, parsing the homomorphic task requests, making response to the homomorphic task based on a homomorphic task scheduling management result, for example, filtering out repeated or improper homomorphic task requests, and the like. The homomorphic task scheduling management function may be used for performing homomorphic task scheduling based on a homomorphic task request parsing result and a homomorphic capability list, delivering a homomorphic task configuration to a homomorphic encryption party, a homomorphic computation party, or a homomorphic decryption party, receiving a homomorphic encryption configuration response/task response, and the like. The homomorphic task profile management function may be used for generating a homomorphic task profile (which may be stored in a homomorphic task management unit) based on a homomorphic task request (or a homomorphic task request parsing result), a homomorphic task scheduling result, and the like; and may perform profile management like forwarding, updating, storage, destruction, or the like.

Refer to FIG. 5 again. The method includes the following steps.

S501: A homomorphic task management unit receives a homomorphic task request, where the homomorphic task request includes a homomorphic task output type.

In this embodiment of this application, when there is a data requirement or the like, a homomorphic task requesting party may send a homomorphic task request to the homomorphic task management unit, where the homomorphic task request may include a needed homomorphic task output type, to request the homomorphic task management unit to establish a homomorphic task used for implementing the homomorphic task output type. In this embodiment of this application, the homomorphic task requesting party may be a terminal device, an access network device, a core network element, an application running on a terminal device, a server, or the like, or a chip, a circuit, a software module, or the like corresponding to the devices (or the network elements, or the like).

Table 1 shows an example of parameters or information that may be included in a homomorphic task request according to an embodiment of this application. The homomorphic task request may further include one or more of parameters such as a homomorphic task type, homomorphic task quality, a quantity of data providers, a data provider parameter, a quantity of data users, a data user parameter, and the like. It should be understood that, Table 1 is merely an example. The homomorphic task request may include some or all parameters in Table 1, or may include a parameter that is not shown in Table 1. This is not limited in this application.

For parameter names, specific parameters, and descriptions of the homomorphic task output type, the homomorphic task type, the homomorphic task quality, the quantity of data providers, the data provider parameter, the quantity of data users, the data user parameter, and the like, refer to Table 1. For example, a parameter name of the homomorphic task output type may be: HE Task output type, where a specific parameter may be one of an artificial intelligence (artificial intelligence, AI) model type parameter, a perception type parameter, a control command, and the like, indicating a type of a homomorphic task output result. A parameter name of the homomorphic task type may be: HE task type, where a specific parameter may be one of AI training/inference, data compression, and the like, indicating a homomorphic computation type of a ciphertext. A parameter name of the homomorphic task quality may be HE QoS, where a specific parameter may include one or more of a latency requirement, a security requirement, and the like, indicating the homomorphic task quality.

**Table 1**

| Parameter list | Parameter name | Specific parameter | Descriptions |
|---|---|---|---|
| Homomorphic task output type | HE Task output type | AI model parameter, perception type parameter, control command, ... | Type of a homomorphic task output result |
| Homomorphic task quality | HE QoS | {latency requirement, security requirement, ...} | Quality of a homomorphic task |
| Homomorphic task type | HE task type | AI training/inference, data compression, ... | Homomorphic computation type of a ciphertext |
| Quantity of data providers | Provider number | Number = 1, 2, 3, ... | Number of data providers |
| Data provider parameters | Provider para | { global id, data type, data rate, ...} | Parameters of the data provider, such as a data provider identifier, a data type, a data rate, or the like |
| Quantity of data users | Consumer number | Number = 1, 2, 3, ... | Number of data users |
| Data user parameters | Consumer para | { global id, data type, data rate, ...} | Parameters of the data user, such as a data user identifier, a data type, a data rate, or the like |

After receiving the homomorphic task request, the homomorphic task management unit may perform parameter parsing on a parameter in the homomorphic task request, to obtain a parsing result. In an example, the homomorphic task request includes the homomorphic task output type, the homomorphic task type, and the homomorphic task quality. The homomorphic task request management function may parse specific parameters of the homomorphic task output type, the homomorphic task type, and the homomorphic task quality in the homomorphic task request. For example, the homomorphic task output type is an AI model type parameter, a perception type parameter, a control command, or the like.

In some implementations, when the homomorphic task request does not include the homomorphic task type, the homomorphic task management unit may determine, based on an association relationship (or a mapping relationship) between a homomorphic task output type and a homomorphic task type, a homomorphic task type associated with the homomorphic task output type carried in the homomorphic task request. For example, when the homomorphic task output type is an AI model type parameter, the homomorphic task type is AI training/inference; or when the homomorphic task output type is a perception type parameter, the homomorphic task type is data compression, or the like. When the homomorphic task request does not include the homomorphic task quality, the homomorphic task request management function may use homomorphic task quality configured by default, or use homomorphic task quality pre-configured for the homomorphic task output type.

In some implementations, the homomorphic task management unit may include a homomorphic task request management function and a homomorphic task scheduling management function. The homomorphic task management unit receives the homomorphic task request, and a function of performing parameter parsing on a parameter in the homomorphic task request may be implemented by using the homomorphic task request management function. For example, after receiving the homomorphic task request, the homomorphic task request management function in the homomorphic task management unit may perform parameter parsing on the parameter in the homomorphic task request, and send a parsing result to the homomorphic task scheduling management function.

S502: The homomorphic task management unit sends one or more pieces of task configuration information to N homomorphic enabling units based on the homomorphic task request, and correspondingly, the N homomorphic enabling units receive the task configuration information, where N is an integer greater than or equal to 1.

Each piece of task configuration information includes one or more homomorphic task participant types of at least one of the N homomorphic enabling units; the homomorphic task participant type includes any one of a homomorphic encryption party, a homomorphic computation party, or a homomorphic decryption party; and the N homomorphic enabling units are configured to implement a homomorphic task corresponding to the homomorphic task output type.

In an example, the homomorphic task management unit may send same task configuration information to A as a homomorphic encryption party, B as a homomorphic decryption party, and C as a homomorphic computation party, where the task configuration information may include homomorphic task participant types respectively corresponding to A, B, and C. The homomorphic task management unit may further separately send the task configuration information to A as a homomorphic encryption party, B as a homomorphic decryption party, and C as a homomorphic computation party, where the task configuration information sent to A may include a homomorphic task participant type corresponding to A, the task configuration information sent to B may include a homomorphic task participant type corresponding to B, and the task configuration information sent to C may include a homomorphic task participant type corresponding to C. A manner in which the homomorphic task management unit sends the task configuration information to the N homomorphic enabling units is not limited in this application.

It may be understood that, a homomorphic task may have one or more homomorphic encryption parties, one or more homomorphic computation parties, and one or more homomorphic decryption parties. If one homomorphic enabling unit in the homomorphic task has only one homomorphic task participant type (which may also be referred to as a homomorphic task role), in this case, one homomorphic task participant in the homomorphic task does not correspond to two or more homomorphic task participant types. In this case, N is equal to a total quantity of homomorphic encryption parties, homomorphic computation parties, and homomorphic decryption parties, and N is greater than or equal to 3.

In a possible implementation, the homomorphic task management unit may generate and schedule a homomorphic task based on a parsing result of the homomorphic task request and homomorphic capability information of the homomorphic task enabling unit, and deliver the task configuration information including the homomorphic task participant type to a scheduled homomorphic enabling unit (HE enabler). The homomorphic enabling unit may be a terminal device, an access network device, a core network element, an independent node, an application layer function node, or the like, or may be a homomorphic encryption party, a homomorphic computation party, or a homomorphic decryption party. In some possible implementations, the homomorphic task management unit includes a homomorphic task scheduling management function. In the implementation, a function of the homomorphic task management unit may alternatively be implemented by the homomorphic task scheduling management function in the homomorphic task management unit.

Table 2 shows an example of homomorphic capability information of a homomorphic enabling unit according to an embodiment of this application. The homomorphic capability information may include one or more of parameters such as a homomorphic enabling unit type, an identifier, a homomorphic encryption capability level, a homomorphic encryption security level, a homomorphic encryption enabling identifier, a homomorphic decryption enabling identifier, a homomorphic computation enabling identifier, a supported homomorphic encryption algorithm identifier, a supported homomorphic computation algorithm identifier, and the like. It should be understood that, Table 2 is merely an example. The homomorphic capability information may include some or all parameters in Table 2, or may include a parameter that is not shown in Table 2. This is not limited in this application.

For parameter names, specific parameters, and descriptions of parameters such as the homomorphic enabling unit type, the identifier, the homomorphic encryption capability level, the homomorphic encryption security level, the homomorphic encryption enabling identifier, the homomorphic decryption enabling identifier, the homomorphic computation enabling identifier, the supported homomorphic encryption algorithm identifier, the supported homomorphic computation algorithm identifier, and the like, refer to Table 2. For example, a parameter name of the type may be a node type (node type), where a specific parameter may be one of a gNB, UE, a network function (network function, NF), an independent node (independent node, IN), and the like, respectively indicating that a homomorphic enabling unit is a base station (corresponding to the gNB), a terminal device (corresponding to the UE), a core network element (corresponding to the NF), an independent node (corresponding to the IN), and the like. A parameter name of the homomorphic encryption enabling identifier may be: homomorphic encryption enabling (HE enc enable), where a specific parameter may be one of true (true) and false (false), indicating whether the homomorphic enabling unit enables a homomorphic encryption function. A parameter name of the homomorphic computation algorithm identifier may be a ciphertext algorithm identifier (ciphertext algorithm id), where a specific parameter may be one or more of a convolutional neural network (convolutional neural network, CNN), a recurrent neural network (recurrent neural network, RNN), a generative adversarial network (generative adversarial network, GAN), a support vector machine (support vector machine, SVM), and the like, indicating a homomorphic computation algorithm supported by the homomorphic enabling unit.

**Table 2 Homomorphic capability information of homomorphic enabling unit**

| Parameter list | Parameter name | Specific parameter | Descriptions |
|---|---|---|---|
| Type | Node type | gNB, UE, NF, IN (independent node), ... | The homomorphic enabling unit type is one of types such as a base station, a terminal, a network element, an independent node, and the like. |
| Identifier | ID | gNB/UE/NF/IN ID | Identifier of a homomorphic enabling unit |
| Homomorphic encryption capability level | HE level | HE level = 1, 2, 3, ... | The homomorphic encryption capability level of the homomorphic enabling unit is one of the following levels: partially (partially) homomorphic, somewhat (somewhat) homomorphic, leveled (leveled) homomorphic, and fully (fully) homomorphic. |
| Security level (or strength) | HE security level | 128 bit, 256 bit, ... | Security strength of a homomorphic enabling unit may be determined based on a key entropy corresponding to the homomorphic enabling unit and an error rate of learning with errors (learning with errors, LWE). |
| Homomorphic encryption enabling identifier | HE enc enable | True, false | True: enable a homomorphic encryption function; false: disable a homomorphic encryption function |
| Homomorphic decryption enabling identifier | HE dec enable | True, false | True: enable a homomorphic decryption function; false: disable a homomorphic decryption function |
| Homomorphic encryption algorithm identifier | HE Algorithm id | BGV (brakerski-gentry-vaikuntanathan) algorithm, BFV (brakerski/fan-vercauteren) algorithm, CKKS (cheon-kim-kim-song) algorithm, fully homomorphic encryption over the torus (fully homomorphic encryption over the torus, TFHE) algorithm, or the like | Specific homomorphic encryption and decryption algorithms, for example, Paillier (addition partially homomorphic), ElGamal (multiplication partially homomorphic), RSA (multiplication partially homomorphic), BGN 05 (somewhat homomorphic), BGV (without bootstrapping: leveled homomorphic; with bootstrapping: fully homomorphic), BFV, CKKS, TFHE, or the like |
| Homomorphic computation enabling identifier | HE eval enable | v, false | True: enable a homomorphic computation function; false: disable a homomorphic computation function |
| Homomorphic computation algorithm identifier | Ciphertext algorithm id | Convolutional neural network (convolutional neural network, CNN), recurrent neural network (recurrent neural network, RNN), generative adversarial network (generative adversarial network, GAN), support vector machine (support vector machine, SVM), or the like | Supported homomorphic computation algorithm (or function) identifier |

In some implementations, when the homomorphic task management unit may generate and schedule the homomorphic task based on the parsing result of the homomorphic task request and the homomorphic capability information of the homomorphic enabling unit, one or more of the following options may be used.

For a homomorphic encryption party or a homomorphic decryption party:
Option 1: The homomorphic task management unit may query for a homomorphic encryption enabling identifier of the homomorphic enabling unit. If the homomorphic encryption enabling identifier is true, it may be determined that the homomorphic enabling unit may serve as a homomorphic encryption party; and may determine, based on information such as a homomorphic task quality requirement in the homomorphic task request, a supported homomorphic encryption algorithm identifier and a security level in the homomorphic capability information of the homomorphic enabling unit, or the like, the homomorphic encryption algorithm identifier used by the homomorphic enabling unit in the homomorphic task.
Option 2: The homomorphic task management unit may further directly query, based on a homomorphic task quality requirement in the homomorphic task request, for a homomorphic enabling unit that has adapted homomorphic capability information, and use the homomorphic enabling unit as a homomorphic encryption party. In addition, the homomorphic encryption algorithm identifier used in the homomorphic task may be determined based on information such as a supported homomorphic encryption algorithm identifier and a security level in the homomorphic capability information. In a possible implementation, if the homomorphic encryption enabling identifier of the adapted homomorphic enabling unit is false, the homomorphic enabling unit may be requested to enable the homomorphic encryption capability.
Option 3: If the homomorphic task request includes a data provider, the homomorphic task management unit may query whether homomorphic encryption capability information of the data provider meets a homomorphic task quality requirement. If the requirement is met, the data provider performs homomorphic encryption, and serves as a homomorphic encryption party. If the requirement is not met, a homomorphic enabling unit that meets the requirement is selected to perform homomorphic encryption, and serves as a homomorphic encryption party, and the homomorphic enabling unit may be allowed to obtain a plaintext provided by the data provider.
Option 4: If the homomorphic task request includes a data user, the homomorphic task management unit may query whether a homomorphic decryption capability of the data user meets a homomorphic task quality requirement. If the requirement is met, the data user performs homomorphic decryption, and serves as a homomorphic decryption party. If the requirement is not met, a homomorphic enabling unit that meets the requirement is selected to perform homomorphic decryption, and the homomorphic enabling unit may be allowed to obtain a plaintext output by the homomorphic task.

It may be understood that, in the option 1 to the option 4, the homomorphic encryption algorithm identifier used by the homomorphic encryption party or the homomorphic decryption party in the homomorphic task may be determined based on the information such as the homomorphic task quality requirement, the supported homomorphic encryption algorithm identifier and the security level in the homomorphic capability information of the homomorphic enabling unit, and the like, or may be specified by the homomorphic task requesting party. In an example, the homomorphic task requesting party may include a homomorphic encryption algorithm identifier in the sent homomorphic task request, to specify the homomorphic encryption algorithm identifier used by the homomorphic encryption party or the homomorphic decryption party in the homomorphic task.

For a homomorphic computation party:
Option 1: The homomorphic task management unit may query for a homomorphic computation enabling identifier of the homomorphic enabling unit. If the homomorphic computation enabling identifier is an enabling state true, it may be determined that the homomorphic enabling unit may serve as a homomorphic computation party; and may determine, based on information such as a homomorphic task type, a homomorphic task quality requirement, a homomorphic encryption algorithm identifier used by a determined homomorphic encryption party, and the like in the homomorphic task request, the homomorphic computation algorithm identifier used in the homomorphic task.
Option 2: The homomorphic task management unit may directly determine, based on information such as a homomorphic task type, a homomorphic task output type, a homomorphic task quality requirement, a homomorphic encryption algorithm identifier used by a determined homomorphic encryption party, and the like in the homomorphic task request, a homomorphic computation algorithm identifier used in the homomorphic task, query for a homomorphic enabling unit supporting the homomorphic computation algorithm identifier, and use the homomorphic enabling unit as a homomorphic computation party. If the homomorphic computation enabling identifier of the adapted homomorphic enabling unit is false, the homomorphic computation capability is requested to be enabled.

It may be understood that, in the option 1 and the option 2, the homomorphic computation algorithm identifier used in the homomorphic task may be determined based on the information such as the homomorphic task type, the homomorphic task output type, the homomorphic task quality requirement, the homomorphic encryption algorithm identifier used by the determined homomorphic encryption party, and the like, or may be specified by the homomorphic task requesting party. In an example, the homomorphic task requesting party may include, in the sent homomorphic task request, a homomorphic encryption algorithm identifier and a homomorphic computation algorithm identifier, to specify the homomorphic encryption algorithm identifier and the homomorphic computation algorithm identifier that are used in the homomorphic task.

It should be understood that, the foregoing descriptions are merely an example of determining the homomorphic encryption party, the homomorphic computation party, and the homomorphic decryption party. A manner of selecting the homomorphic encryption party, the homomorphic computation party, and the homomorphic decryption party is not limited in embodiments of this application. For example, a homomorphic task quality requirement may not be considered, and a homomorphic computation algorithm identifier used in the homomorphic task is determined only based on a homomorphic task type and/or a homomorphic task output type. One or more homomorphic enabling units that support the homomorphic computation algorithm identifier serve as homomorphic computation parties, one or more homomorphic enabling units with homomorphic encryption enabling identifiers of true serve as homomorphic encryption parties, and one or more homomorphic decryption enabling units with homomorphic decryption enabling identifiers of true serve as homomorphic decryption parties. The homomorphic encryption party or the homomorphic decryption party may use any supported homomorphic encryption algorithm or the like.

In some implementations, the homomorphic task management unit may include a homomorphic task scheduling management function. The homomorphic task is generated and scheduled by the homomorphic task management unit based on a parsing result of the homomorphic task request and homomorphic capability information of the homomorphic enabling unit, or may be implemented by using the homomorphic task scheduling management function.

After the N homomorphic enabling units serving as the homomorphic encryption party, the homomorphic computation party, and the homomorphic decryption party that are used for completing the homomorphic task are determined, the homomorphic task scheduling management function may deliver the homomorphic task configuration information (for example, a homomorphic task participant type) to the N homomorphic enabling units by using the one or more pieces of task configuration information.

In an example, the homomorphic task scheduling management function may broadcast one piece of task configuration information, where the configuration message may include a homomorphic task index of the homomorphic task, homomorphic enabling unit identifiers of N homomorphic enabling units used for completing the homomorphic task, and a homomorphic task participant type corresponding to each homomorphic enabling unit, so that each enabling unit used for completing the homomorphic task can learn of the homomorphic task participant type in the homomorphic task.

In another example, the homomorphic task scheduling management node may separately send the task configuration information to each homomorphic enabling unit used for completing the homomorphic task, where the task configuration information sent to each homomorphic enabling unit may include a homomorphic task index of the homomorphic task and a homomorphic task participant type of the homomorphic enabling unit in the homomorphic task.

In some implementations, the task configuration information may further include the homomorphic computation algorithm identifier and/or the homomorphic encryption algorithm identifier, so that the N homomorphic enabling units used for completing the homomorphic task separately learn of the homomorphic computation algorithm identifier and/or the homomorphic encryption algorithm identifier used in the homomorphic task.

Table 3 shows an example of parameters or information included in task configuration information according to an embodiment of this application. The task configuration information may also be referred to as homomorphic task configuration information (or message). The task configuration information may include one or more of a homomorphic task index, a homomorphic task participant type, a participant identifier, a homomorphic encryption algorithm identifier, a homomorphic computation algorithm identifier, and the like. It should be understood that, Table 3 is merely an example. The task configuration information may include some or all parameters in Table 3, or may include a parameter that is not shown in Table 3. This is not limited in this application. For parameter names, specific parameters, and descriptions of the homomorphic task index, the homomorphic task participant type, the participant identifier, the homomorphic encryption algorithm identifier, the homomorphic computation algorithm identifier, and the like, refer to Table 3. For example, a parameter name of the homomorphic task index may be a homomorphic task index (HE Task ID), where a specific parameter may be one of an ID 1, an ID 2, and the like, and may indicate a unique identifier of a homomorphic task in an HETM domain.

**Table 3**

| Parameter list | Parameter name | Specific parameter | Descriptions |
|---|---|---|---|
| Homomorphic task index | HE task ID | ID 1, ID 2, ... | Unique identifier of a homomorphic task in a management domain of a homomorphic task management unit |
| Homomorphic task participant type | HE enabler type | Encryption party, homomorphic computation party, decryption party, ... | Homomorphic task role |
| Participant identifier | HE node type, ID | {gNB, gNB ID}, {UE, UE ID}, ... | Node type and identifier of a homomorphic participant |
| Homomorphic encryption algorithm identifier | HE Algorithm id | BGV, BFV, CKKS, TFHE, or the like | Identifier of a homomorphic encryption algorithm |
| Homomorphic computation algorithm identifier | Ciphertext algorithm id | CNN, RNN, GAN, SVM, or the like | Homomorphic computation algorithm identifier of a homomorphic computation party |

Each homomorphic enabling unit may support one or more homomorphic computation algorithms, and/or one or more homomorphic computation algorithms. If the homomorphic task configuration information does not include a homomorphic computation algorithm identifier or a homomorphic computation algorithm identifier, the homomorphic enabling unit may use, based on a homomorphic task participant type of the homomorphic enabling unit in the homomorphic task, a homomorphic encryption algorithm or a homomorphic computation algorithm configured by default (that is, by default) for the homomorphic task participant type. The homomorphic encryption algorithm or the homomorphic computation algorithm configured by the homomorphic enabling unit by default (that is, by default) in different homomorphic encryption roles (such as a homomorphic encryption party or a homomorphic computation party) may be reported to the homomorphic task management unit by using the homomorphic capability information or the like, so that the homomorphic task management unit learns of the information.

For example, homomorphic encryption algorithms supported by a homomorphic enabling unit 1 include BGV and BFV. After learning, by using task configuration information, that a homomorphic task participant type in a homomorphic task 1 is a homomorphic encryption party, the homomorphic enabling unit 1 may use the homomorphic encryption algorithm BGV configured by default for the homomorphic encryption party as a homomorphic encryption algorithm used for completing the homomorphic task by the homomorphic encryption party in the homomorphic task 1.

In addition, computation resources for homomorphic computation (for example, CNN) according to different homomorphic encryption algorithms (for example, BGV and TFHE) may be different. The computation resources may include one or more of a computation circuit, a computating resource, a storage resource, and the like. In this embodiment of this application, the task configuration information sent to the at least one homomorphic enabling unit serving as the homomorphic computation party may further include a homomorphic encryption algorithm identifier.

After receiving the task configuration information sent by the homomorphic task scheduling management function, the homomorphic enabling unit may feed back a task configuration response (or a first homomorphic task response) to the homomorphic task scheduling management function, where the task configuration response (or the first homomorphic task response) may indicate that the homomorphic enabling unit successfully receives the task configuration information and/or accepts the task configuration. After receiving the task configuration response (or the first homomorphic task response) of the N homomorphic enabling units used for completing the homomorphic task, the homomorphic task scheduling management function may send a second homomorphic task response to the homomorphic task request management function, to notify the homomorphic task request management function that the homomorphic task scheduling is completed. After receiving the second homomorphic task response, the homomorphic task request management function may reply with a third homomorphic task response to the homomorphic task requesting party. The third homomorphic task response may further include a homomorphic task index, to notify the homomorphic task requesting party that the homomorphic task configuration is completed.

In some implementations, a homomorphic task profile in the homomorphic task management unit may further generate a homomorphic task profile (profile) based on a homomorphic task request (or a homomorphic task request parsing result) and a homomorphic task scheduling result (for example, the one or more pieces of task configuration information sent to the N homomorphic enabling units), and store the homomorphic task profile in the homomorphic task management unit.

Table 4 shows an example of parameters or information included in a homomorphic task profile according to an embodiment of this application. The homomorphic task profile may include homomorphic task parameters: such as a homomorphic task index, a homomorphic task type, and the like; homomorphic encryption party parameters: such as a homomorphic task participant type, a quantity of homomorphic encryption parties, and parameters of each homomorphic encryption party; homomorphic computation party parameters: such as a homomorphic task participant type, a quantity of homomorphic computation parties, and parameters of each homomorphic computation party; and homomorphic decryption party parameters: such as a homomorphic task participant type, a quantity of homomorphic decryption parties, and parameters of each homomorphic decryption party; and may further include data user parameters: such as a homomorphic task participant type, a quantity of data users, parameters of a data user, and the like. It should be understood that, Table 4 is merely an example. The homomorphic task profile may include some or all parameters in Table 4, or may include a parameter that is not shown in Table 4. This is not limited in this application. For parameter names, specific parameters, and descriptions of the homomorphic task index, the homomorphic task type, and the like, refer to Table 4. Details are not described again.

**Table 4**

| Homomorphic task profile | | | | |
|---|---|---|---|---|
| Parameter category | Parameter list | Parameter name | Specific parameter | Descriptions |
| Homomorphic task | Homomorphic task index | HE task ID | ID 1, ID 2, ... | Unique identifier of a homomorphic task in a management domain of a homomorphic task management unit |
| | Homomorphic task type | HE task type | AI training/inference, data compression, ... | Type of a homomorphic task |
| | Homomorphic task quality | HE QoS | {latency requirement, security requirement, ...} | Quality of a homomorphic task |
| | Homomorphic encryption algorithm identifier | HE Algorithm id | BGV, BFV, CKKS, TFHE, or the like | Identifier of a homomorphic encryption algorithm |
| | Homomorphic computation algorithm identifier | Ciphertext algorithm id | CNN, RNN, GAN, SVM, or the like | Identifier of a homomorphic computation algorithm |
| Homomorphic encryption party | Homomorphic task participant type | HE enabler type | Encryption party, decryption party, and computation party | Configure a homomorphic task participant type of a homomorphic enabling unit in a homomorphic task |
| | Quantity of homomorphic encryption parties | Encryption number | Number = 1, 2, 3, ... | Number of data homomorphic encryption parties |
| | Parameters of homomorphic encryption party 1 | HE encryption para 1 | {Party ID 1, global id, data type, data rate, ...} | Parameters of a data encryption participant, such as an identifier of the data encryption participant, a global identifier, a data type (an integer, a floating point, or a complex number), a data rate, or the like |
| | Parameters of homomorphic encryption party 2 | HE encryption para 2 | {Party ID 2, global id, data type, data rate, ...} | Parameters of a data encryption participant, such as an identifier of the data encryption participant, a global identifier, a data type (an integer, a floating point, or a complex number), a data rate, or the like |
| Data user | Homomorphic task participant type | HE enabler type | Data user, ... | Configure a homomorphic task participant type of a homomorphic enabling unit in a homomorphic task |
| | Quantity of data users | Consumer number | Number = 1, 2, 3, ... | Number of data users |
| | Data user parameters | Consumer para | {global id, data type, data rate, ...} | Parameters of a data user, such as an identifier, a data type (an integer, a floating point, or a complex number), a data rate, or the like |
| Homomorphic computation party | Homomorphic task participant type | HE enabler type | Homomorphic privacy computation party, ... | Configure a homomorphic task participant type of a homomorphic enabling unit in a homomorphic task |
| | Quantity of homomorphic computation parties | Calculation node number | Number = 1, 2, 3, ... | Number of homomorphic privacy computation participants |
| | Parameters of homomorphic computation party 1 | HE calculation para 1 | {Party ID 1, global id, computation task, performance requirement, ...} | Parameters of a homomorphic computation participant, such as an identifier of the homomorphic computation participant, a global identifier, a computation task, a performance requirement (for example, a latency/storage requirement, or the like), or the like |
| | Parameters of homomorphic computation party 2 | HE calculation para 2 | {Party ID 2, global id, computation task, performance requirement, ...} | Parameters of a homomorphic computation participant, such as an identifier of the homomorphic computation participant, a global identifier, a computation task, a performance requirement (for example, a latency/storage requirement, or the like), or the like |
| Homomorphic decryption party | Homomorphic task participant type | HE enabler type | Homomorphic decryption party, ... | Configure a homomorphic task participant type of an HE enabler in a homomorphic task |
| | Quantity of homomorphic decryption parties | Decryption number | Number = 1, 2, 3, ... | Number of homomorphic decryption participants |
| | Parameters of homomorphic decryption party 1 | HE decryption para 1 | {global id, policy, ...} | Global identifier, decryption policy, or the like. The homomorphic decryption party needs a part or all of decryption keys. |
| | Parameters of homomorphic decryption party 2 | HE decryption para 2 | {global id, policy, ...} | Global identifier, decryption policy, or the like. The homomorphic decryption party needs a part or all of decryption keys. |

In some implementations, the homomorphic task requesting party, the homomorphic task management unit, and the like may further exchange messages such as a homomorphic task request and a response by using a trusted engine (engine) and a trusted enabling unit (referred to as a security capability node or a security function, referred to as a gear unit (gear) below). The engine is a central decision-making and management and scheduling unit of a trusted network capability, and may be configured to be responsible for formulating and sending a basic security policy to a communication party, and performing security management functions such as establishment, maintenance, update, or the like. The gear is a unit for agreement, execution, and self-evolution of a trusted network capability, may be bound (or correspond) to one or more nodes in a communication system, and serves as a security function to provide a security capability for the bound one or more nodes. The engine may configure the gear serving as the security function, so that the security function can be flexibly configured.

Refer to the diagram of a homomorphic task management procedure shown in FIG. 7. A homomorphic task requesting party may perform a homomorphic task request with a homomorphic task management unit in an engine based on a gear corresponding to the homomorphic task requesting party, and perform exchange with a corresponding homomorphic task response (for example, a third homomorphic task response). The homomorphic task management unit in the engine may also send homomorphic task configuration information to the gear of the homomorphic enabling unit, receive a configuration response of the gear of the homomorphic enabling unit, and the like. The gear and the engine provide security protection for the homomorphic task procedure.

In some implementations, homomorphic capability information of a homomorphic enabling unit may be managed by using a homomorphic capability management unit. The homomorphic capability management unit may also be referred to as a homomorphic encryption capability management (homomorphic encryption capability management, HECapM) unit. The homomorphic capability management unit may have a homomorphic enabling unit profile (profile) management function, and can receive homomorphic capability information reported by the homomorphic enabling unit (for example, a homomorphic encryption party, a homomorphic computation party, or a homomorphic decryption party), and the like; and may generate, store, or update, based on the homomorphic capability information, a homomorphic capability profile (profile) registered by the homomorphic enabling unit, where the homomorphic capability profile registered by the homomorphic enabling unit may be stored in the homomorphic capability management unit.

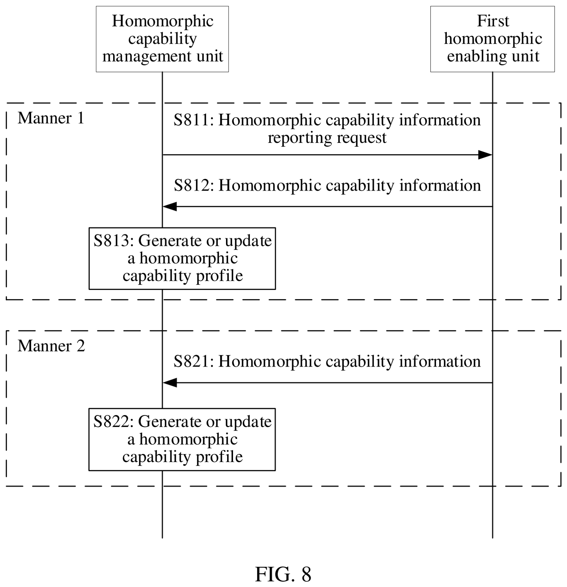

For example, homomorphic capability information management is performed by a first homomorphic enabling unit (HE Enabler 1). FIG. 8 is an example of a possible homomorphic capability management procedure according to an embodiment of this application.

In a manner 1, the homomorphic capability management procedure includes the following steps.

S811: A homomorphic capability management unit sends a homomorphic capability information reporting request to a first homomorphic enabling unit, and correspondingly, the first homomorphic enabling unit receives the homomorphic capability information reporting request, where the homomorphic capability information reporting request is used for requesting homomorphic capability information of the first homomorphic enabling unit.

In a possible implementation, the homomorphic capability management unit may send the homomorphic capability information reporting request to the first homomorphic enabling unit when the first homomorphic enabling unit is registered in a homomorphic capability management unit, or the homomorphic capability management unit initially establishes a connection to the first homomorphic enabling unit, to obtain the homomorphic capability information of the first homomorphic enabling unit.

In a possible implementation, after obtaining the homomorphic capability information of the first homomorphic enabling unit, the homomorphic capability management unit may also periodically send the homomorphic capability information reporting request to the first homomorphic enabling unit based on a specified periodicity, to obtain the latest homomorphic capability information of the first homomorphic enabling unit.

S812: The first homomorphic enabling unit sends the homomorphic capability information to the homomorphic capability management unit, and correspondingly, the homomorphic capability management unit receives the homomorphic capability information.

S813: The homomorphic capability management unit generates or updates a homomorphic capability profile of the first homomorphic enabling unit based on the homomorphic capability information of the first homomorphic enabling unit.

After receiving the homomorphic capability information reporting request, the first homomorphic enabling unit may send the homomorphic capability information to the homomorphic capability management unit. After receiving the homomorphic capability information of the first homomorphic enabling unit, the homomorphic capability management unit may generate the homomorphic capability profile of the first homomorphic enabling unit based on the received homomorphic capability information of the first homomorphic enabling unit, or update the stored homomorphic capability profile of the first homomorphic enabling unit.

In this embodiment of this application, for a parameter included in the homomorphic capability information of the first homomorphic enabling unit, refer to descriptions of the homomorphic capability information in Table 2. Details are not described again. The homomorphic capability profile may include a part or all of the homomorphic capability information of the first homomorphic enabling unit, and may further include information about a homomorphic task that the first homomorphic enabling unit currently participates in.

Table 5 shows an example of parameters or information included in a possible homomorphic capability profile according to an embodiment of this application. The homomorphic capability profile may include a parameter part related to homomorphic capability information of a first homomorphic enabling unit. For parameters of the part, refer to descriptions of the parameter part of the homomorphic capability information in Table 2. Details are not described again. The homomorphic capability profile may further include a related parameter of a homomorphic task that the homomorphic enabling unit (for example, the first homomorphic enabling unit) currently participates in. For example, the first homomorphic enabling unit currently participates in a homomorphic task 1. The homomorphic capability profile may further include a parameter with a name of HE task para 1 of the homomorphic task 1, and related parameters, such as one or more of a homomorphic task identifier (HE task ID), a homomorphic task type (HE task type), a homomorphic task participant type, and the like. The related parameters of the homomorphic task 1 may record a global id (which may be indicated by using an HE task ID), a task type (which may be indicated by using an HE task type), a homomorphic task participant type (which may be indicated by using an HE enabler type) of the first homomorphic enabling unit in the homomorphic task 1, and the like of the homomorphic task 1.

**Table 5**

| Homomorphic capability profile | | | | |
|---|---|---|---|---|
| Parameter category | Parameter list | Parameter name | Specific parameter | Descriptions |
| Homomorphic encryption capability of | Storage number | Profile id | Profile id, ... | Storage identifier of a homomorphic capability profile in a domain |
| homomorphic enabling unit | Node type | Node type | gNB, UE, NF, IN (independent node), ... | The homomorphic enabling unit type is one of types such as a base station, a terminal, a network element, an independent node, and the like. |
| | Node identifier | ID | gNB/UE/NF/IN ID | Identifier of a homomorphic enabling unit |
| | Homomorphic encryption capability level | HE level | HE level = 1, 2, 3, ... | The homomorphic encryption capability level of the homomorphic enabling unit is one of the following levels: partially homomorphic, somewhat homomorphic, leveled homomorphic, and fully homomorphic. |
| | Security level (or strength) | HE security level | 128 bit, 256 bit, ... | Security strength of a homomorphic enabling unit |
| | Homomorphic encryption enabling identifier | HE enc enable | True, false | True: enable a homomorphic encryption function; false: disable a homomorphic encryption function |
| | Homomorphic decryption enabling identifier | HE dec enable | True, false | True: enable a homomorphic decryption function; false: disable a homomorphic decryption function |
| | Homomorphic encryption algorithm identifier | HE Algorithm id | BGV, BFV, CKKS, TFHE, or the like | Specific homomorphic encryption and decryption algorithms. |
| | | | | Paillier (addition partially homomorphic), ElGamal (multiplication partially homomorphic), RSA (multiplication partially homomorphic), BGN 05 (somewhat homomorphic), BGV (without bootstrapping: leveled homomorphic; with bootstrapping: fully homomorphic), BFV, CKKS, TFHE, or the like |
| | Homomorphic computation enabling identifier | HE eval enable | True, false | True: enable a homomorphic computation function; false: disable a homomorphic computation function |
| | Homomorphic computation algorithm identifier | Ciphertext algorithm id | CNN, RNN, GAN, SVM, or the like | Homomorphic computation function identifier, for example, ciphertext computation CNN, RNN, GAN, SVM, or the like. |
| Homomorphic task that a homomorphic enabling unit currently participates in | Homomorphic task 1 | HE task para 1 | {HE task ID, HE task type, HE Algorithm id, HE evaluation id, enabler type, ...} | Parameters related to a homomorphic task 1 that a homomorphic enabling unit participates in, for example, a global identifier of the homomorphic task, a homomorphic encryption algorithm, a role of the homomorphic enabling unit in the homomorphic task, or the like |
| | **Homomorphic** task 2 | HE task para 2 | ... | ... |
| | **Homomorphic** task 3 | HE task para 3 | ... | ... |

In a manner 2, the homomorphic capability management procedure includes the following steps.

S821: A first homomorphic enabling unit sends homomorphic capability information to a homomorphic capability management unit, and correspondingly, the homomorphic capability management unit receives the homomorphic capability information.

S822: The homomorphic capability management unit generates or updates a homomorphic capability profile of the first homomorphic enabling unit based on the homomorphic capability information of the first homomorphic enabling unit.

In a manner 2, the first homomorphic enabling unit may actively send the homomorphic capability information to the homomorphic capability management unit. For example, the first homomorphic enabling unit may send (or report) the homomorphic capability information to the homomorphic capability management unit when the first homomorphic enabling unit is registered in the homomorphic capability management unit, or initially establishes a connection to the homomorphic capability management unit. After receiving the homomorphic capability information of the first homomorphic enabling unit, the homomorphic capability management unit may generate the homomorphic capability profile of the first homomorphic enabling unit based on the homomorphic capability information of the first homomorphic enabling unit, or update the stored homomorphic capability profile of the first homomorphic enabling unit. It may be understood that, the first homomorphic enabling unit may also periodically report the homomorphic capability information after registering with the homomorphic capability management unit or establishing the connection to the homomorphic capability management unit. This is not limited in this application.

In this embodiment of this application, a homomorphic task key may be further managed by using a key management unit (where the key management unit may also be referred to as a homomorphic encryption key management (homomorphic encryption key management, HEKM) unit). For example, the key management unit may generate a homomorphic encryption/decryption/computation key based on a homomorphic task key derivation request from the homomorphic task management unit, and perform management such as key distribution, use, update, storage, destruction, key lifecycle management, or the like.

In a possible implementation, after receiving the homomorphic task request, and sending the task configuration information to the N homomorphic enabling units configured to implement the homomorphic task, the homomorphic task management unit may send the homomorphic task key request to the key management unit. The homomorphic task key request is used for requesting the key management unit to deliver the homomorphic task key to at least one of the N homomorphic enabling units, where the homomorphic task key request may include one or more of homomorphic task participant types of each of the N homomorphic enabling units and homomorphic encryption algorithm identifiers used in the homomorphic task.

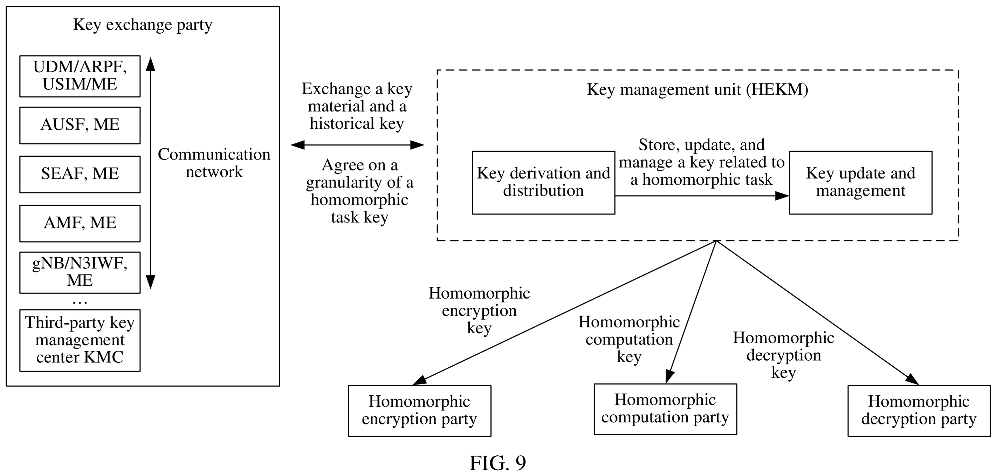

Refer to FIG. 9. In this embodiment of this application, the key management unit may perform exchange with another key exchange party, and exchanged content may include one or more of a key material, a historical key, a public parameter used for generating a homomorphic task key, and the like, and may further agree on a granularity of the homomorphic task key. The key exchange party may include a unit that stores symmetric keys or security contexts of users at all levels in a symmetric key architecture of a universal subscriber identity module (universal subscriber identity module, USIM) in a communication network, for example, a network element or an infrastructure in a communication network, for example, a unified data management (unified data management, UDM)/authentication credential repository and processing function (authentication credential repository and processing function, ARPF) network element, an authentication server function (authentication server function, AUSF) network element, a security anchor function (security anchor function, SEAF) network element, an access and mobility management function (access and mobility management function, AMF) network element, a gNB/non-3GPP interworking function (non-3GPP interworking function, N3IWF) network element, a USIM/mobile equipment (mobile equipment, ME) network element, or the like; and a third-party key management center (key management center, KMC) with an independent key architecture, and the like. The key management unit may perform exchange with the key exchange party, to derive, distribute, update, and manage the homomorphic task key.

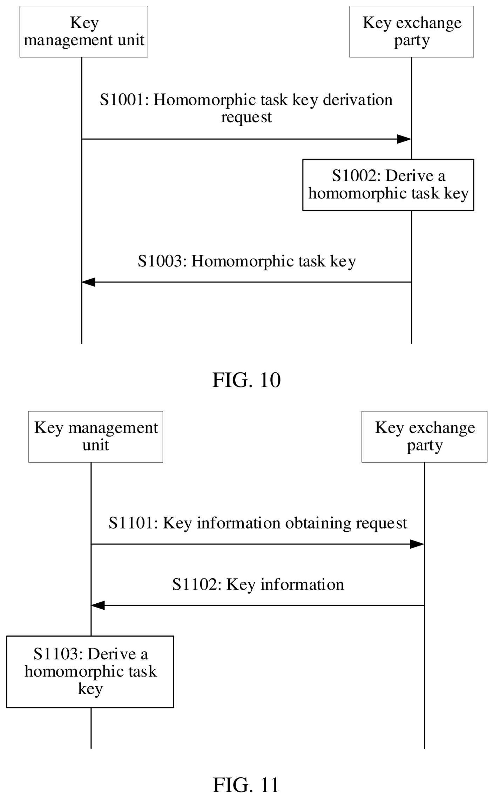

FIG. 10 is a diagram of a derivation procedure of a homomorphic task key according to an embodiment of this application.

S1001: A key management unit sends a homomorphic task key derivation request to a key exchange party, and correspondingly, the key exchange party receives the homomorphic task key derivation request.

The homomorphic task key derivation request includes an identifier of at least one homomorphic enabling unit participating in a homomorphic task, and optionally may further include a public parameter used for deriving a homomorphic task key, and a homomorphic encryption algorithm identifier used in the homomorphic task.

S1002: The key exchange party derives a homomorphic task key, where the homomorphic task key may include one or more of a homomorphic encryption key, a homomorphic computation key, and a homomorphic decryption key.

S1003: The key exchange party sends the homomorphic task key to the key management unit, and correspondingly, the key management unit receives the homomorphic task key.

In a possible implementation, after receiving the homomorphic task key derivation request, the key exchange party may obtain or search, based on the identifier of the at least one homomorphic enabling unit participating in the homomorphic task, a key material (for example, a symmetric key, a security context, or the like associated with the at least one homomorphic enabling unit) associated with the at least one homomorphic enabling unit, and may derive the homomorphic task key by using the key material associated with the at least one homomorphic enabling unit, a public parameter used for deriving the homomorphic task key, and a key generator corresponding to the homomorphic encryption algorithm identifier. The key generator may be an algorithm, a function, an algorithm procedure, or the like for key derivation, and key generators corresponding to different homomorphic encryption algorithm identifiers may be different.

For example, the key material associated with the at least one homomorphic enabling unit and the public parameter used for deriving the homomorphic task key may be used as an input of a key derivation function (key derivation function, KDF) corresponding to a homomorphic encryption algorithm identifier, and the key exchange party derives a homomorphic task key (including a homomorphic encryption key, a homomorphic decryption key, or a homomorphic computation key) needed in the homomorphic task.

FIG. 11 is a diagram of a derivation procedure of another homomorphic task key according to an embodiment of this application.

S1101: A key management unit sends a key information obtaining request to a key exchange party, and correspondingly, the key exchange party receives the key information obtaining request.

The key information obtaining request includes an identifier of at least one homomorphic enabling unit participating in a homomorphic task.

S1102: The key exchange party sends key information to the key management unit, and correspondingly, the key management unit receives the key information.

The key information includes a key material of the at least one homomorphic enabling unit participating in the homomorphic task.

S1103: The key management unit derives a homomorphic task key based on the key information, a public parameter used for deriving the homomorphic task key, and a key generator corresponding to a homomorphic encryption algorithm identifier used in the homomorphic task, where the homomorphic task key may include a homomorphic encryption key, a homomorphic computation key, and a homomorphic decryption key.

Different from that in FIG. 10, the homomorphic task key is derived by the key exchange party, in FIG. 11, the homomorphic task key is derived by the key management unit. Because an implementation of derivation of the homomorphic task key in FIG. 11 is similar to an implementation of derivation of the homomorphic task key in FIG. 10, and only subjects of derivation of the homomorphic task key are different, for the implementation of derivation of the homomorphic task key in FIG. 11, refer to the implementation of derivation of the homomorphic task key in FIG. 10. Details are not described again.

That the homomorphic task key is derived by the key exchange party can reduce computation overheads of the key management unit. That the homomorphic task key is derived by the key management unit can prevent the homomorphic task key from exchanging with the key exchange party, to improve key security.

In addition, refer to FIG. 9 again. After the homomorphic task key (including the homomorphic encryption key, the homomorphic computation key, and the homomorphic decryption key) is derived, the key management unit may deliver the homomorphic encryption key to a homomorphic encryption party, deliver the homomorphic computation key to a homomorphic computation party, and deliver the homomorphic decryption key to a homomorphic decryption party; and perform management operations such as storing the homomorphic task key of the homomorphic task, or the like.

In a possible implementation, refer to FIG. 9. In this embodiment of this application, the key management unit may further agree on a granularity of the homomorphic task key with the key exchange party, where the granularity of the homomorphic task key may be a task level, a user level, or a sub-domain level.

The task level may indicate that the homomorphic task has only one task-level homomorphic encryption key.

The user level may indicate that there are Q user-level homomorphic encryption keys in the homomorphic task, where each data type/data source corresponds to one homomorphic encryption key, and Q is a quantity of encryption keys of different data types/data sources in the homomorphic task.

The sub-domain level may indicate that there are K sub-domain level homomorphic encryption keys in the homomorphic task, where all data encryption in each sub-domain corresponds to one homomorphic encryption key, and K is a quantity of sub-domains related to a homomorphic enabling unit serving as a homomorphic encryption party in the homomorphic task. When the key granularity of the homomorphic task key is a sub-domain level, a quantity of sets of homomorphic task keys is the same as a quantity K of sub-domains, and one or more homomorphic encryption parties in a same sub-domain correspond to one set of homomorphic encryption keys.

It should be understood that, the homomorphic task key may be derived and delivered based on the granularity of the homomorphic task key.

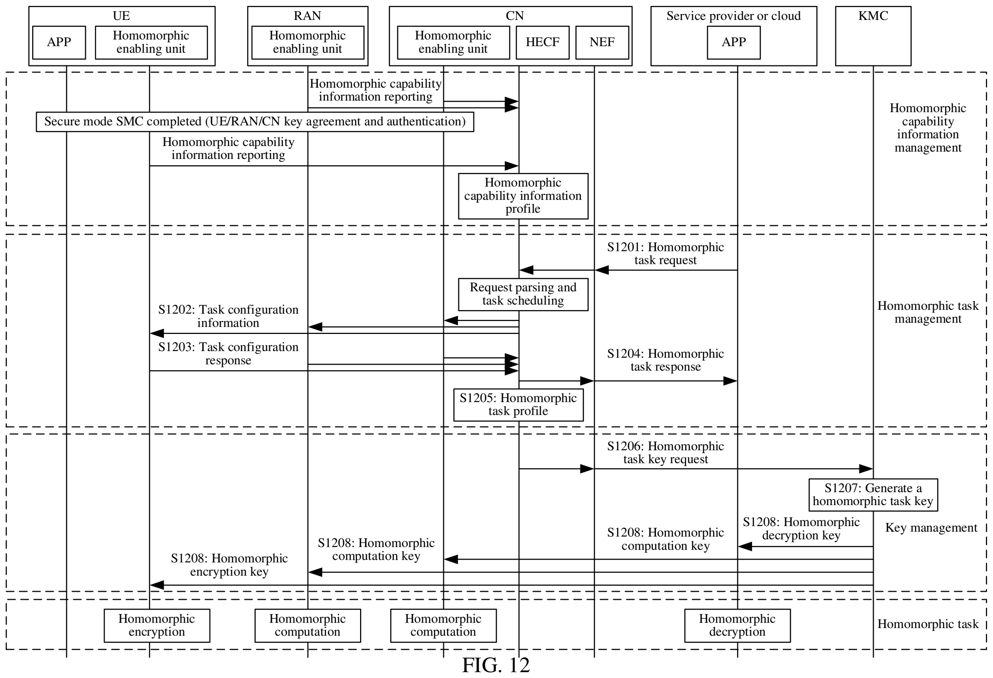

In this embodiment of this application, the homomorphic task management unit, the homomorphic capability management unit, and the key management unit may be separately deployed, or may be integrated into one node for deployment. This is not limited in this application. The following uses an example in which a homomorphic encryption control function (homomorphic encryption control function, HECF) network element has functions of the homomorphic task management unit, the homomorphic capability management unit, and the key management unit. FIG. 12 provides an end-to-end (end to end, E2E) procedure of a homomorphic task.

S1201: A homomorphic task requesting party sends a homomorphic task request to an HECF network element.

For example, a local sensor (for example, a radar, a camera, or the like) of a terminal device (UE is used as an example in the figure) collects some data, and the data needs to be transmitted to a service provider or a cloud (cloud) after homomorphic computation is performed by using a node in a communication network. The service provider or the cloud (the homomorphic task requesting party) may deliver the homomorphic task request to a communication network, and a network exposure function (network exposure function, NEF) network element in the communication network receives the homomorphic task request and forwards the homomorphic task request to the HECF network element. The HECF network element receives the homomorphic task request.

S1202: The HECF network element sends one or more pieces of task configuration information to N homomorphic enabling units.

After receiving the homomorphic task request, the HECF network element may parse the homomorphic task request, perform homomorphic task orchestration or scheduling, and send the one or more pieces of task configuration information to a plurality of enabling units, where each piece of task configuration information may include a homomorphic task participant type of at least one of the N homomorphic enabling units.

S1203: A plurality of homomorphic task enabling units feed back task configuration responses (or first homomorphic task responses) to the HECF network element.

S1204: After receiving the task configuration responses (or the first homomorphic task responses) of the plurality of homomorphic task enabling units, the HECF network element may send a third homomorphic task response to the homomorphic task requesting party.

For example, after receiving the task configuration responses (or the first homomorphic task responses) of the plurality of homomorphic task enabling units, the HECF network element may send the third homomorphic task response to an NEF network element. Further, the NEF network element sends the third homomorphic task response to the cloud service provider or the cloud (the homomorphic task requesting party).

S1205: The HECF network element may further generate and manage a homomorphic task profile.

S 1206: The HECF network element sends a homomorphic task key request to a KMC.

S1207: The KMC generates a homomorphic task key (including a homomorphic encryption key, a homomorphic computation key, or a homomorphic decryption key).

S 1208: The KMC distributes the homomorphic task key to the plurality of homomorphic task enabling units.

It may be understood that, the KMC may distribute a corresponding homomorphic task key (for example, a homomorphic encryption key, a homomorphic computation key, or a homomorphic decryption key) based on a homomorphic task participant type (for example, a homomorphic encryption party, a homomorphic computation party, or a homomorphic decryption party) of the homomorphic task enabling unit in the homomorphic task.

After the homomorphic task key is distributed, the homomorphic task starts to be performed. After collecting data, the terminal device performs homomorphic encryption on the data. A homomorphic enabling unit like UE, a RAN, a network function (network function, NF) network element in a CN, or the like performs homomorphic computation on the data obtained through homomorphic encryption. The NF network element in the CN finally sends a homomorphic computation result to the service provider or the cloud, and a cloud application (application, APP) performs homomorphic decryption to obtain plaintext data.

It may be understood that, before the foregoing procedure, network nodes such as the UE, the RAN, the NF network element in the CN, or the like may report the homomorphic capability information of the homomorphic enabling units. For example, after establishing a secure channel with the HECF network element, the network nodes report the homomorphic capability information of the homomorphic enabling units to the HECF network element, and the HECF network element may generate and manage homomorphic capability information profiles of the homomorphic enabling units. For example, the UE may report the homomorphic capability information to the HECF after completing security mode control (security mode control, SMC) with the RAN (base station)/CN.

For an implementation of a homomorphic encryption capability information management part, refer to descriptions of the homomorphic capability management unit part. For an implementation of the homomorphic task management part (for example, S1201 to S1205), refer to descriptions of the homomorphic task management unit part. For an implementation of the key management part (for example, S1206 to S1208), refer to descriptions of the key management unit part. Details are not described again.

In this embodiment of this application, ciphertext storage management may be further performed by using a ciphertext data storage management (ciphertext data storage management, CDSM) unit. The ciphertext data storage management unit may have one or more of functions such as ciphertext receiving and sending management, ciphertext storage lifecycle management, ciphertext storage management, and the like.
(1) Ciphertext receiving and sending management: Support receiving a ciphertext from a homomorphic encryption party (for example, a homomorphic enabling unit serving as a homomorphic encryption party) or a symmetric/asymmetric encryption party (for example, a node supporting symmetric encryption or asymmetric encryption in a communication network), and sending the ciphertext to a homomorphic computation party (for example, a homomorphic enabling unit serving as a homomorphic computation party), a homomorphic decryption party (for example, a homomorphic enabling unit serving as a homomorphic decryption party), a symmetric/asymmetric decryption party (for example, a node supporting symmetric decryption or asymmetric decryption in a communication network), or the like. The symmetric/asymmetric encryption party may be a symmetric/asymmetric encryption party that does not support a homomorphic feature, and the symmetric/asymmetric decryption party may be a symmetric/asymmetric decryption party that does not support a homomorphic feature.

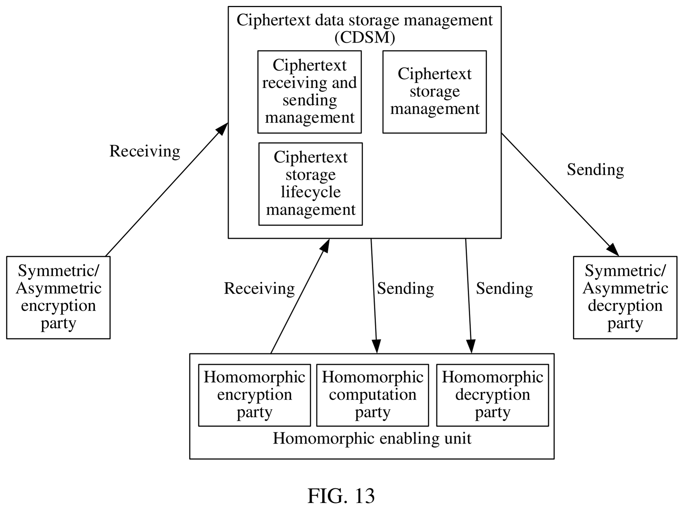

In an example, refer to FIG. 13. After encrypting data, a homomorphic encryption party or a symmetric/asymmetric encryption party may send a ciphertext to a ciphertext data storage management unit, and the ciphertext data storage management unit may store the received ciphertext. The ciphertext received or stored by the ciphertext data storage management unit may be a symmetric ciphertext obtained through symmetric encryption, an asymmetric ciphertext obtained through asymmetric encryption, or a homomorphic ciphertext obtained through homomorphic encryption.

In addition, the ciphertext data storage management unit may further send the stored ciphertext to a homomorphic computation party, a homomorphic decryption party, or a symmetric/asymmetric decryption party.

In a possible implementation, the ciphertext data storage management unit may send the ciphertext based on a request or configuration of the homomorphic task management unit.

In an example, the ciphertext data storage management unit receives ciphertext transmission configuration information from the homomorphic task management unit, where the ciphertext transmission configuration information includes a ciphertext data identifier and an identifier of at least one homomorphic enabling unit serving as a homomorphic computation party. In this case, the ciphertext data storage management unit may send, based on the ciphertext transmission configuration information, a stored ciphertext corresponding to the ciphertext data identifier to the at least one homomorphic enabling unit serving as the homomorphic computation party.

(2) Ciphertext storage lifecycle management: Support a homomorphic encryption party, a symmetric/asymmetric encryption party, or a ciphertext data storage management unit in setting a storage lifecycle for a ciphertext. The storage lifecycle of the ciphertext starts when the ciphertext data storage management unit receives the ciphertext, and the data storage management unit deletes the ciphertext after the storage lifecycle ends (or expires). The storage lifecycle of the ciphertext may be duration or a time length that the ciphertext can be stored, for example, 24 hours, 48 hours, 72 hours, or the like.

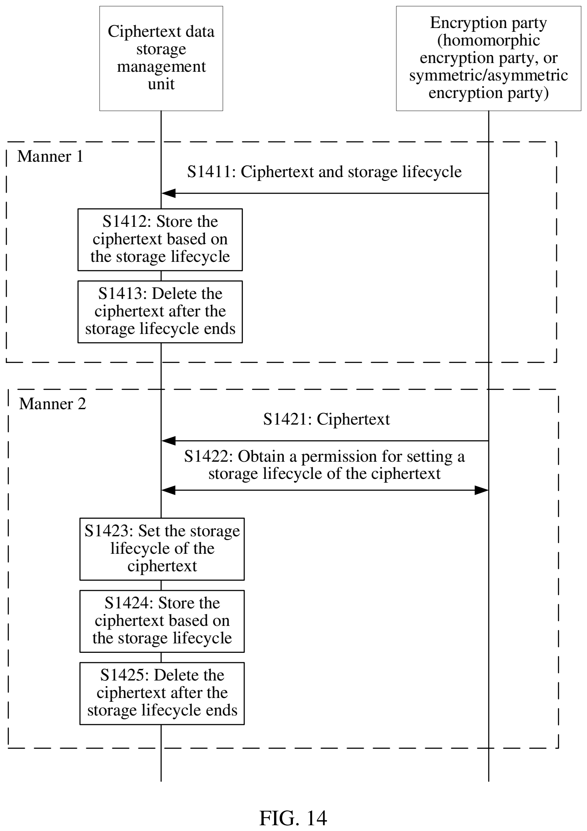

FIG. 14 shows an example of a possible ciphertext storage lifecycle management procedure according to an embodiment of this application.

In a manner 1, the procedure includes the following steps.

S1411: A ciphertext data storage management unit receives a ciphertext from an encryption party and a storage lifecycle.

In this embodiment of this application, the encryption party may be a homomorphic encryption party or a symmetric/asymmetric encryption party, and the ciphertext may be a symmetric ciphertext obtained through symmetric encryption, an asymmetric ciphertext obtained through asymmetric encryption, or a homomorphic ciphertext obtained through homomorphic encryption.

S1412: The ciphertext data storage management unit stores the ciphertext based on the storage lifecycle.

After receiving the ciphertext and the storage lifecycle of the ciphertext, the ciphertext data storage management unit may store the ciphertext and set the storage lifecycle of the ciphertext.

S1413: After the storage lifecycle of the ciphertext ends (or expires), the ciphertext data storage management unit deletes the ciphertext.

In a manner 2, the procedure includes the following steps.

S1421: A ciphertext data storage management unit receives a ciphertext from an encryption party.

S1422: The ciphertext data storage management unit obtains a permission for setting the storage lifecycle of the ciphertext from the encryption party.

In an example, the ciphertext data storage management unit may send a query request of whether to allow to obtain the permission for setting the storage lifecycle of the ciphertext to the encryption party, and receive a query response responded by the encryption party, where the query response may include information about whether to allow (or authorize) to set the storage lifecycle of the ciphertext.

S1423: When the permission for setting the storage lifecycle of the ciphertext is obtained, the ciphertext data storage management unit may set the storage lifecycle of the ciphertext.

S1424: The ciphertext data storage management unit stores the ciphertext based on the storage lifecycle.

S1425: After the storage lifecycle of the ciphertext ends (or expires), the ciphertext data storage management unit deletes the ciphertext.

(3) Ciphertext storage management: Support ciphertext domain-based storage. Specifically, ciphertext storage domains may be obtained through division for ciphertext storage based on one or more of a user (for example, a homomorphic enabling unit) to which the ciphertext belongs, an encryption key corresponding to the ciphertext, a network layer associated with the ciphertext, a network slice type associated with the ciphertext, a security context associated with the ciphertext, and the like.

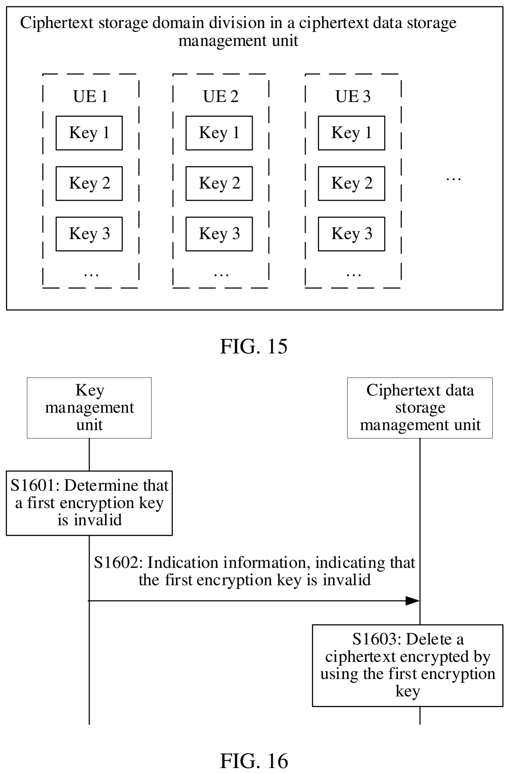

FIG. 15 is a diagram of two-level storage domain division based on different users and different encryption keys of each user. UE 1, UE 2, and UE 3 represent different users, and a key 1, a key 2, and a key 3 represent different encryption keys. Different users have different ciphertext storage domains. For example, the UE 1 and the UE 2 have different ciphertext storage domains, and ciphertext storage domains of different encryption keys of a same user are different. For example, ciphertext storage domains of a ciphertext encrypted by the UE 1 by using the key 1 is different from ciphertext storage domains of a ciphertext encrypted by the UE 1 by using the key 2.

In addition, the ciphertext data storage management unit may further support a ciphertext validity query and/or destruction function.

FIG. 16 is a diagram of a possible key invalidation procedure according to an embodiment of this application. The procedure includes the following steps.

S1601: A key management unit determines that a first encryption key is invalid.

S1602: The key management unit sends indication information to a ciphertext data storage management unit, where the indication information indicates that the first encryption key is invalid.

S1603: The ciphertext data storage management unit deletes the ciphertext encrypted by using the first encryption key.

In a possible implementation, when the first encryption key is cracked or leaked, or a key material for generating the first encryption key is cracked or leaked, or a key lifecycle of the first encryption key expires, the key management unit may determine that the first encryption key is invalid, and send, to the ciphertext data storage management unit, the indication information indicating that the first encryption key is leaked or invalid. After receiving the indication information, the ciphertext data storage management unit may delete the ciphertext encrypted by using the first encryption key, to ensure ciphertext security.

In some implementations, the homomorphic task management unit may further receive a ciphertext query response from the ciphertext data storage management unit by sending a ciphertext query message or an inquiry message to the ciphertext data storage management unit, to query whether the ciphertext is valid.

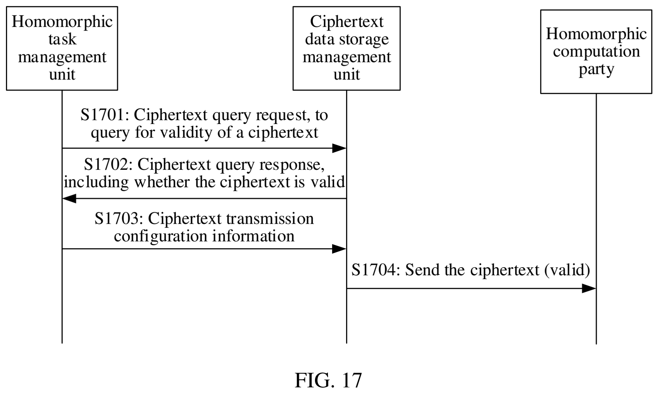

For example, before the homomorphic task management unit delivers a ciphertext sending task to the ciphertext data storage management unit by using ciphertext transmission configuration information or the like, the homomorphic task management unit queries whether the ciphertext is valid. FIG. 17 provides a diagram of a possible ciphertext validity query process. The procedure includes the following steps.

S1701: A ciphertext data storage management unit receives a ciphertext query request from a homomorphic task management unit.

The ciphertext query request may include a ciphertext data identifier, and is used for querying validity of a ciphertext corresponding to the ciphertext data identifier.

S1702: The ciphertext data storage management unit sends a ciphertext query response to the homomorphic task management unit.

The ciphertext query response includes whether the ciphertext corresponding to the ciphertext data identifier is valid, and that the ciphertext is valid includes that a storage lifecycle of the ciphertext has not ended and/or an encryption key corresponding to the ciphertext has not expired.

S1703: The ciphertext data storage management unit receives ciphertext transmission configuration information from the homomorphic task management unit.

The ciphertext transmission configuration information includes the ciphertext data identifier and an identifier of at least one homomorphic enabling unit serving as a homomorphic computation party.

S1704: The ciphertext data storage management unit sends, based on the ciphertext transmission configuration, a stored ciphertext corresponding to the ciphertext data identifier to the at least one homomorphic enabling unit serving as the homomorphic computation party.

As shown in FIG. 17, before sending the ciphertext transmission configuration to the ciphertext data storage management unit, the homomorphic task management unit may query whether the ciphertext scheduled by using the ciphertext transmission configuration information is valid, to ensure reliability of the homomorphic task.

FIG. 18A-1 and FIG. 18A-2 are a diagram of another homomorphic task procedure according to this application. In the homomorphic task procedure shown in FIG. 18A-1 and FIG. 18A-2, the computation may be performed not only on the homomorphic task, but also on a non-homomorphic ciphertext. To be specific, not only homomorphic computation can be performed on a homomorphic ciphertext, but also homomorphic computation can be performed on a non-homomorphic ciphertext, to expand an application scope of the homomorphic task.

S1801: A key management unit in an HECF network element generates an encryption key and a decryption key.

The encryption key and the decryption key may be a homomorphic encryption key and a homomorphic decryption key, or may be a non-homomorphic encryption key and a non-homomorphic decryption key, for example, a symmetric/asymmetric encryption key and a symmetric/asymmetric decryption key.

S1802: The key management unit in the HECF network element sends the encryption key to an encryption party.

The encryption party may be a homomorphic encryption party (for example, a homomorphic enabling unit serving as a homomorphic encryption party), a non-homomorphic encryption party (for example, a symmetric/asymmetric encryption party), or the like. Optionally, the key management unit in the HECF network element may also send the decryption key to a decryption party, where the decryption party may be a homomorphic decryption party (for example, a homomorphic enabling unit serving as a homomorphic decryption party), a non-homomorphic decryption party (for example, a symmetric/asymmetric decryption party), or the like.

S1803: The ciphertext data storage management unit in the HECF network element stores a ciphertext from the encryption party.

S1804: A homomorphic task requesting party sends a homomorphic task request to the homomorphic task management unit in the HECF network element.

S1805: The homomorphic task management unit in the HECF network element sends one or more pieces of task configuration information to N homomorphic enabling units.

The homomorphic task management unit in the HECF network element receives the homomorphic task request, may parse the homomorphic task request, perform homomorphic task orchestration or scheduling, determine an encryption party (which may be a homomorphic encryption party or a non-homomorphic encryption party), a homomorphic computation party, and a decryption party (which may be a homomorphic decryption party or a non-homomorphic decryption party), and send one or more pieces of task configuration information to a plurality of enabling units, where each piece of task configuration information may include a homomorphic task participant type (for example, a homomorphic computation party or a decryption party) of at least one of the N homomorphic enabling units.

S 1806: A plurality of homomorphic task enabling units feed back task configuration responses (or first homomorphic task responses) to the homomorphic task management unit in the HECF network element.

S1807: The homomorphic task management unit in the HECF network element may further generate and manage a homomorphic task profile.

For example, the homomorphic task profile is generated and managed based on a parsing result of the homomorphic task request and a homomorphic task scheduling result.

S1808: The homomorphic task management unit in the HECF network element may further send a homomorphic task key request to the homomorphic task key management unit.

S1809: The homomorphic task key management unit in the HECF network element generates a homomorphic task key, and delivers the homomorphic task key.

S1810: The homomorphic encryption task management unit in the HECF network element sends ciphertext sending task configuration information to the ciphertext storage management unit, so that the ciphertext storage management unit sends a stored ciphertext of the encryption party to a homomorphic computation party.

After obtaining the ciphertext, the homomorphic computation party may perform homomorphic computation on the ciphertext, and send a computation result to a decryption party for decryption.

It may be understood that, if the homomorphic computation party obtains a homomorphic ciphertext, the homomorphic computation may be directly performed. That is, the encryption party, the homomorphic computation party, and the decryption party may respectively perform homomorphic encryption, homomorphic computation, and homomorphic decryption by using a homomorphic encryption key, a homomorphic computation key, and a homomorphic decryption key. For derivation of the homomorphic encryption key, the homomorphic computation key, and the homomorphic decryption key, refer to foregoing descriptions of the homomorphic task key management unit. Details are not described again.

If the homomorphic computation party obtains a non-homomorphic ciphertext, the homomorphic computation party may first perform homomorphic encryption to obtain a hybrid ciphertext (a ciphertext obtained through non-homomorphic encryption + homomorphic encryption), and then perform homomorphic computation and non-homomorphic decryption to obtain the homomorphic ciphertext. After obtaining the homomorphic ciphertext, the homomorphic computation party then performs homomorphic computation and sends a homomorphic ciphertext obtained through computation to the decryption party. The non-homomorphic encryption includes symmetric encryption or asymmetric encryption that does not support a homomorphic feature.

When the encryption party uses non-homomorphic encryption, the key management unit may obtain, by using the key exchange party, a non-homomorphic decryption key corresponding to the non-homomorphic encryption used by the encryption party; derive a homomorphic encryption key, a homomorphic computation key, and a homomorphic decryption key based on the non-homomorphic decryption key, a public parameter used for deriving the homomorphic task key, and a key generator corresponding to a homomorphic encryption algorithm identifier used in the homomorphic task; and send the homomorphic encryption key and the homomorphic computation key to the homomorphic computation party, and send the homomorphic decryption key to at least one homomorphic enabling unit of the decryption party. The homomorphic computation key includes a first switching key, where the first switching key is a homomorphic ciphertext obtained by performing homomorphic encryption on a non-homomorphic decryption key corresponding to a non-homomorphic ciphertext, and is used by the at least one homomorphic enabling unit serving as the homomorphic computation party to perform homomorphic computation and non-homomorphic decryption on a ciphertext obtained by performing homomorphic encryption again on the non-homomorphic ciphertext by using the homomorphic encryption key, to obtain the homomorphic ciphertext. The non-homomorphic decryption includes symmetric decryption or asymmetric decryption that does not support a homomorphic feature, and the non-homomorphic ciphertext is a ciphertext obtained through the non-homomorphic encryption.

If the homomorphic computation party obtains a non-homomorphic ciphertext, the homomorphic computation party may further perform homomorphic encryption to obtain a hybrid ciphertext (a ciphertext obtained through non-homomorphic encryption + homomorphic encryption), and then perform homomorphic computation and non-homomorphic decryption to obtain the homomorphic ciphertext. After obtaining the homomorphic ciphertext, the homomorphic computation party then performs homomorphic computation and may switch the homomorphic ciphertext obtained through computation into the non-homomorphic ciphertext and send the non-homomorphic ciphertext to the decryption party. The non-homomorphic encryption includes symmetric encryption or asymmetric encryption that does not support a homomorphic feature.

When the encryption party uses non-homomorphic encryption, the key management unit may obtain, by using the key exchange party, a non-homomorphic encryption key and a non-homomorphic decryption key corresponding to the non-homomorphic encryption used by the encryption party; and derive a homomorphic task key based on a public parameter used for deriving the homomorphic task key and a key generator corresponding to a homomorphic encryption algorithm identifier used in the homomorphic task, where the homomorphic task key includes a homomorphic encryption key, a homomorphic computation key, a homomorphic decryption key, and a second switching key. The homomorphic encryption key, the homomorphic computation key, and the second switching key are sent to the homomorphic computation party. The homomorphic computation key includes a first switching key, where the first switching key is a homomorphic ciphertext obtained by performing homomorphic encryption on a non-homomorphic decryption key corresponding to a non-homomorphic ciphertext, and is used by the at least one homomorphic enabling unit serving as the homomorphic computation party to perform homomorphic computation and non-homomorphic decryption on a ciphertext obtained by performing homomorphic encryption again on the non-homomorphic ciphertext by using the homomorphic encryption key, to obtain the homomorphic ciphertext. The second switching key may be used by the homomorphic computation party to switch a homomorphic ciphertext obtained through the homomorphic computation into a non-homomorphic ciphertext obtained through non-homomorphic encryption. The non-homomorphic encryption includes symmetric encryption or asymmetric encryption that does not support a homomorphic feature, the non-homomorphic decryption includes symmetric decryption or asymmetric decryption that does not support a homomorphic feature, and the non-homomorphic ciphertext is a ciphertext obtained through the non-homomorphic encryption.

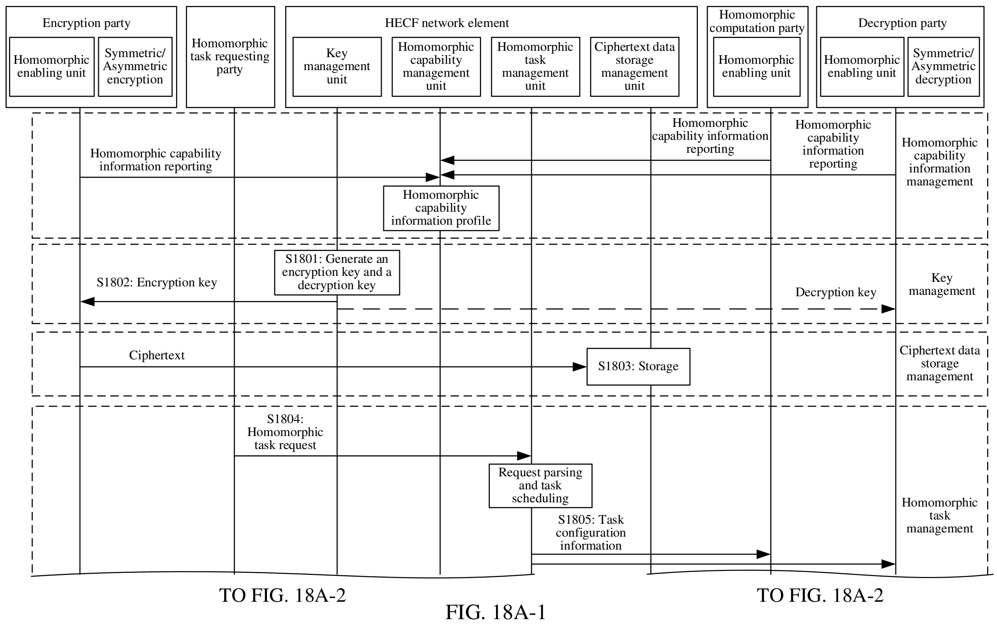

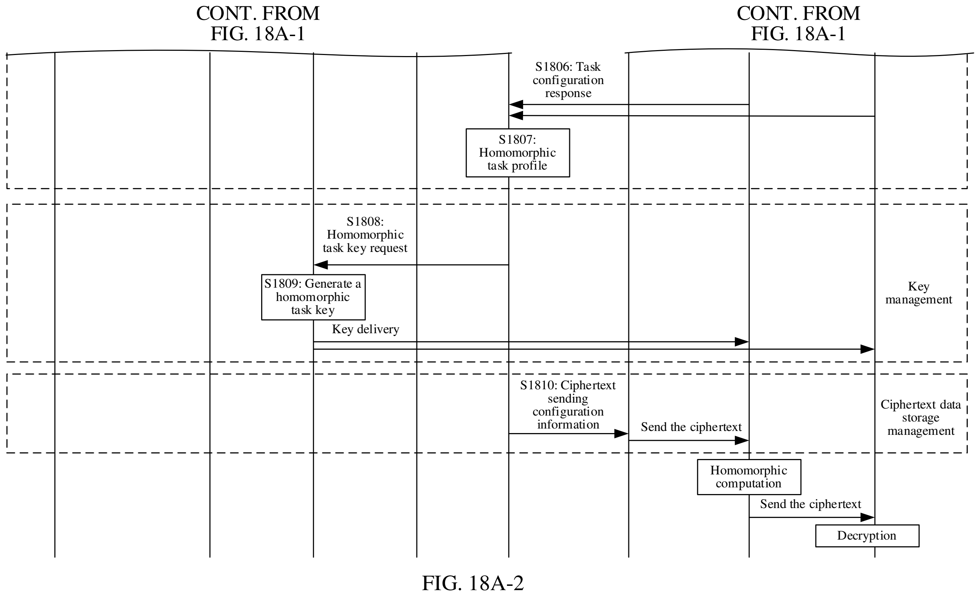

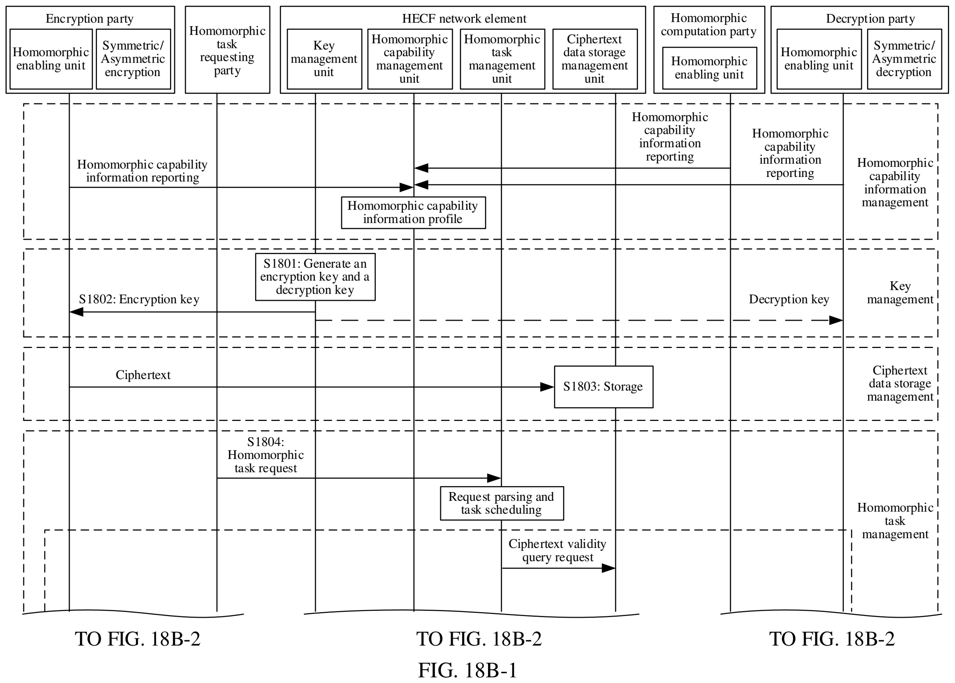

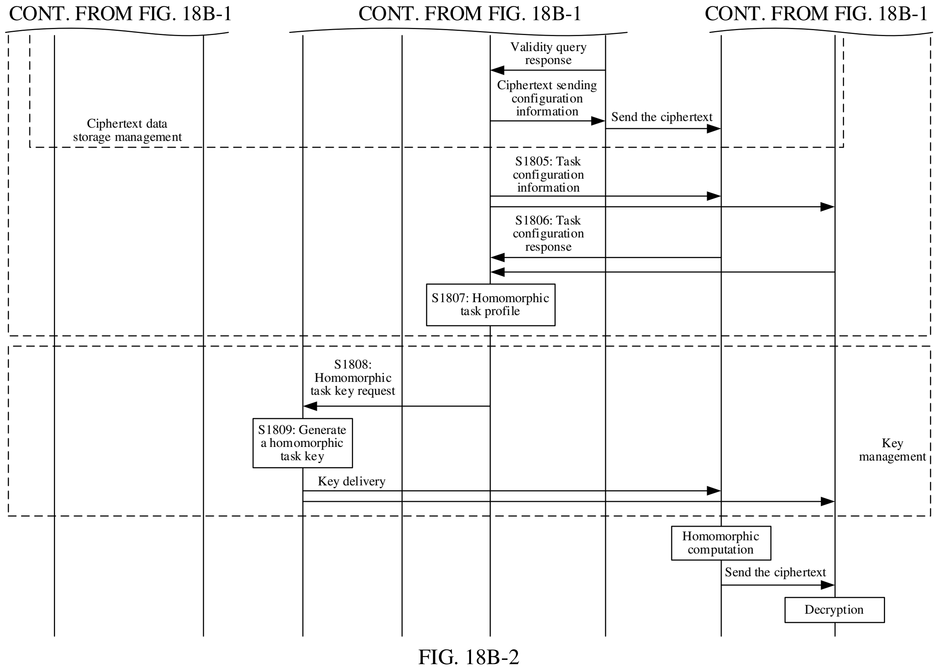

In some embodiments, before sending the ciphertext transmission configuration information to the ciphertext data storage management unit (for example, S1810), or sending the task configuration information to the homomorphic computation party (for example, S1805) for performing homomorphic task scheduling, the homomorphic task management unit may further query for validity of the ciphertext of the encryption party, for example, after determining that the ciphertext of the encryption party is valid by interacting with the ciphertext query request and response of the ciphertext data storage management unit, perform subsequent steps to ensure reliability of the homomorphic task. Refer to diagrams of a homomorphic task procedure shown in FIG. 18B-1 and FIG. 18B-2. Compared with the homomorphic task procedure shown in FIG. 18A-1 and FIG. 18A-2, the homomorphic task management unit may query for validity of a ciphertext of an encryption party before sending task configuration information (as shown in S1805 in FIG. 18A-1) to a homomorphic computation party or the like to perform homomorphic task scheduling. Optionally, after querying that the ciphertext of the encryption party is valid, the homomorphic task management unit may further send ciphertext transmission configuration information to the ciphertext data storage management unit, to indicate the ciphertext data storage management unit to send a stored ciphertext of the encryption party to the homomorphic computation party.

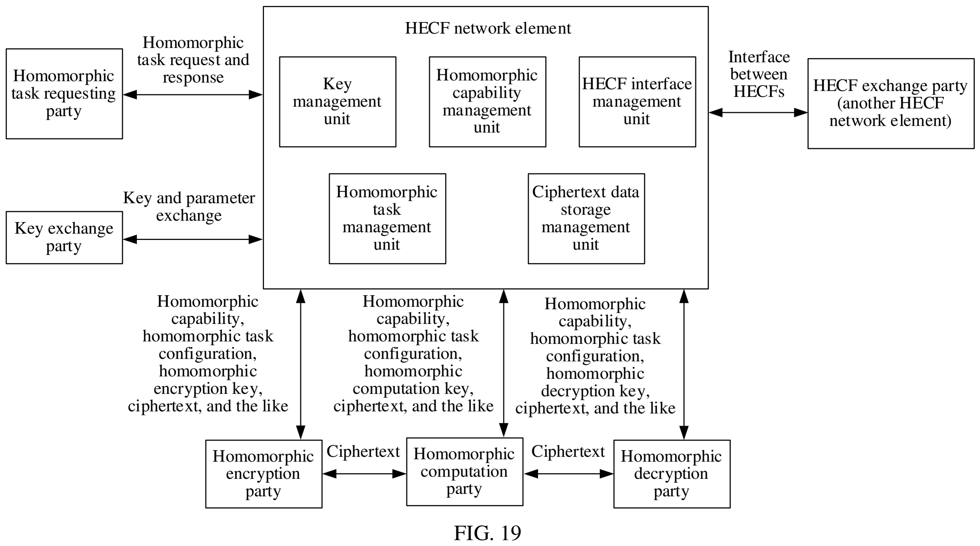

It may be understood that, the homomorphic task management unit, the homomorphic capability management unit, the key management unit, and the ciphertext data storage management unit may be separately deployed, or may be integrated into one node for deployment. This is not limited in this application. In an example, refer to FIG. 19. Functions of the homomorphic task management unit, the homomorphic capability management unit, the key management unit, and the ciphertext data storage management unit may be integrated into an HECF network element. The HECF network element may be deployed in a core network.

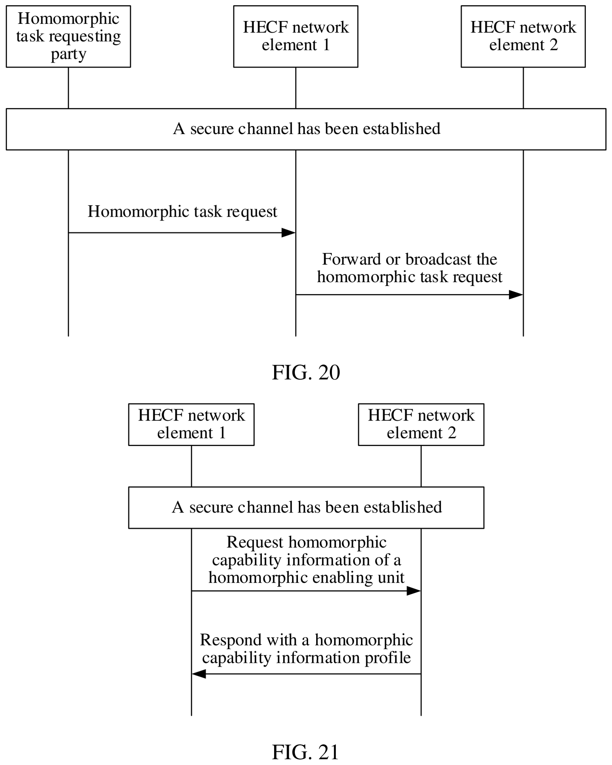

In some implementations, as shown in FIG. 19, the HECF network element may further include an HECF interface management (HECF interface management, HEinterM) unit, configured to support the HECF network element to be deployed across domains, at layers, or on a plurality of nodes, and support forwarding information such as a homomorphic capability information profile, a homomorphic task profile, and a homomorphic key parameter between HECF network elements. FIG. 20 to FIG. 23 show some examples of interaction between HECF network elements supported by HECF interface management.

Refer to FIG. 20. After a secure channel is established between an HECF network element 1 and an HECF network element 2, the HECF network element 1 may forward (transfer) or broadcast (broadcast) a homomorphic task request from a homomorphic task requesting party to the HECF network element 2.

Refer to FIG. 21. After a secure channel is established between an HECF network element 1 and an HECF network element 2, the HECF network element 1 may request, from the HECF network element 2, homomorphic capability information of a homomorphic enabling unit in a management domain of the HECF network element 2. The request message may include information such as an identifier of the homomorphic enabling unit. The HECF network element 2 sends a homomorphic capability information profile of the homomorphic enabling unit to the HECF network element 1.

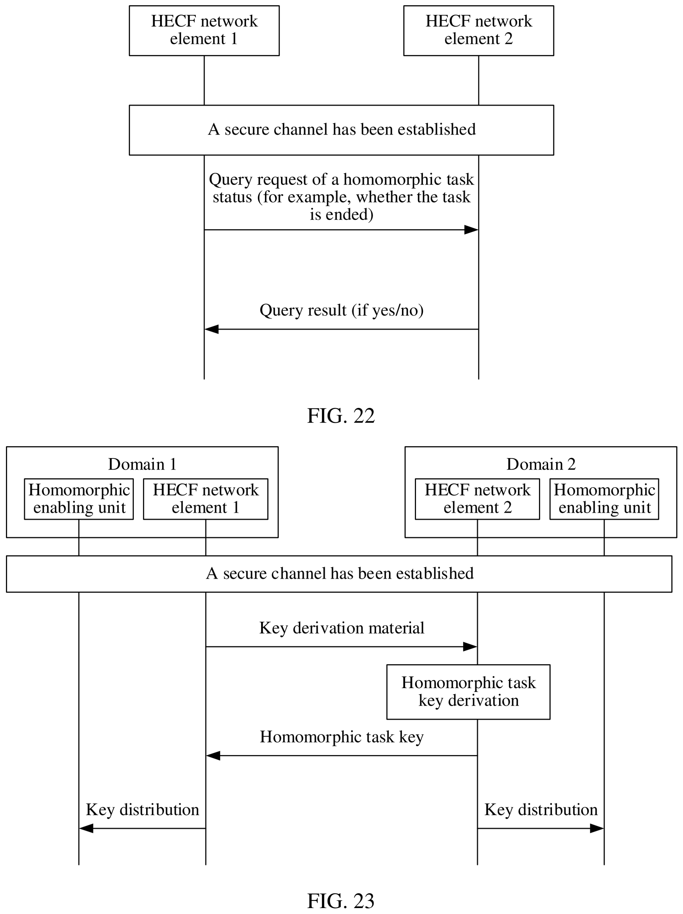

Refer to FIG. 22. After a secure channel is established between an HECF network element 1 and an HECF network element 2, the HECF network element 1 may send, to the HECF network element 2, a query request of a homomorphic task status managed by the HECF network element 2. The query request message may include information such as an identifier of the homomorphic task, and may be used for querying information such as whether a homomorphic task that a specific node participates in ends. The HECF network element 2 sends a query result to the HECF network element 1.

Refer to FIG. 23. A secure channel between an HECF network element 1, an HECF network element 2, and respectively managed homomorphic enabling units has been established. If a plurality of participants of the homomorphic task involve N homomorphic enabling units in management domains of the HECF network element 1 and the HECF network element 2, the HECF network element 1 may send a key derivation material (for example, an identifier of a homomorphic task, a homomorphic encryption algorithm identifier (HE Algorithm id), a homomorphic computation algorithm (or function) identifier (COUNT), or the like) to the HECF network element 2. The HECF network element 2 performs key derivation of the homomorphic task based on the key derivation material sent by the HECF network element 1 and the key material of the homomorphic enabling unit in the domain of the HECF network element 2. The HECF network element 2 sends the derived homomorphic task key to the HECF network element 1. The HECF network element 1 may distribute the homomorphic task key to the participated homomorphic enabling unit in the domain of the HECF network element 1. The HECF network element 2 distributes the homomorphic task key to the participated homomorphic enabling unit in the domain of the HECF network element 2.

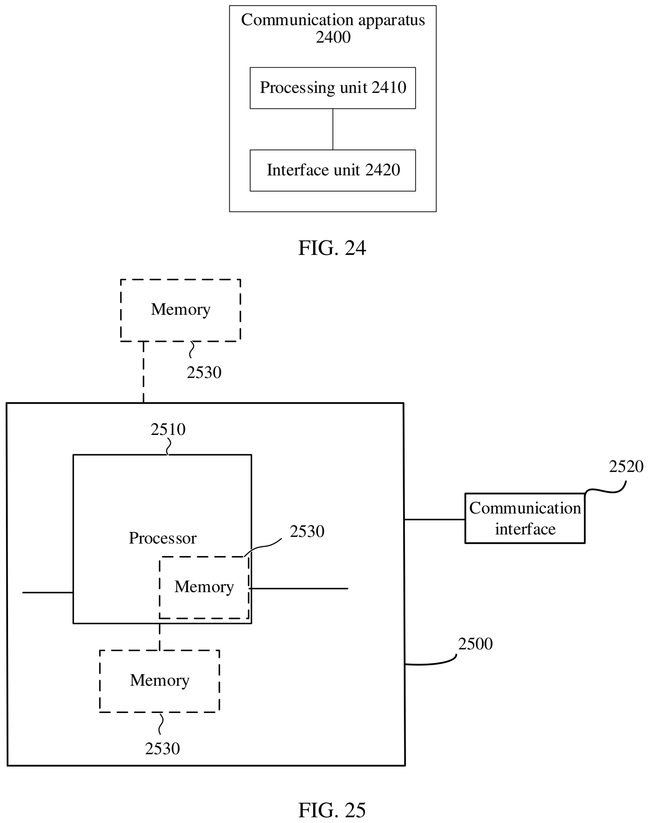

The following describes a communication apparatus provided in embodiments of this application. FIG. 24 is a diagram of a structure of a communication apparatus according to an embodiment of this application. The communication apparatus may be configured to perform steps performed by the HECF network element (including one or more of the homomorphic task management unit, the homomorphic capability management unit, the key management unit, the ciphertext data storage management unit, and the interface management unit between the HECFs) in the foregoing embodiment. For details, refer to related descriptions in the foregoing method embodiment. The communication apparatus may include a module or a unit configured to perform all or some of possible steps in the method embodiment. The module or unit may be implemented by using software, hardware, or a combination of software and hardware.

For example, as shown in FIG. 24, the communication apparatus 2400 includes a processing unit 2410 and an interface unit 2420. The interface unit 2420 may further be a transceiver unit or an input/output interface. The communication apparatus 2400 may be configured to implement the steps performed by the HECF network element in the foregoing embodiment.

When the communication apparatus 2400 is configured to implement the steps performed by the HECF network element in the foregoing embodiment,
the interface unit 2420 is configured to receive a homomorphic task request, where the homomorphic task request includes a homomorphic task output type; and the processing unit 2410 is configured to: determine to send one or more pieces of task configuration information to N homomorphic enabling units based on the homomorphic task request, where each piece of task configuration information includes one or more homomorphic task participant types of at least one of the N homomorphic enabling units; the homomorphic task participant type includes any one of a homomorphic encryption party, a homomorphic computation party, and a homomorphic decryption party; and the N homomorphic enabling units are configured to implement a homomorphic task of the homomorphic task output type; and the interface unit 2420 is further configured to send the one or more pieces of task configuration information to the N homomorphic enabling units.

For another implementation, refer to related descriptions of the HECF network element (including one or more of the homomorphic task management unit, the homomorphic capability management unit, the key management unit, the ciphertext data storage management unit, and the interface management unit between the HECFs) in the foregoing embodiment. Details are not described herein again.

As shown in FIG. 25, this application further provides a communication apparatus 2500. The communication apparatus includes a processor 2510, and may further include a communication interface 2520. The processor 2510 and the communication interface 2520 are coupled to each other. It may be understood that, the communication interface 2520 may be a transceiver, an input/output interface, an input interface, an output interface, an interface circuit, or the like. Optionally, the communication apparatus 2500 may further include a memory 2530, configured to store instructions executed by the processor 2510, store input data required by the processor 2510 to run the instructions, or store data generated after the processor 2510 runs the instructions. The memory 2530 may be a physically independent unit, or may be coupled to the processor 2510, or the processor 2510 includes the memory 2530, or the processor 2510 and the memory 2530 may be integrated together.

When the communication apparatus 2500 is configured to implement the steps performed by the HECF network element in the foregoing embodiment, the processor 2510 may be configured to implement a function of the processing unit 2410, and the communication interface 2520 may be configured to implement a function of the interface unit 2420.

It should be noted that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist in a network device or a terminal device as discrete components.

All or some of the foregoing embodiments may be implemented by using software, hardware, firmware, or any combination thereof. When software is used to implement embodiments, all or some of embodiments may be implemented in a form of a computer program product The computer program product includes one or more computer programs or instructions. When the computer programs or the instructions are loaded and executed on a computer, the procedure or functions according to embodiments of this application are all or partially generated. The computer may be a general-purpose computer, a dedicated computer, a computer network, a network device, user equipment, or another programmable apparatus. The computer programs or the instructions may be stored in a computer-readable storage medium, or transmitted from one computer-readable storage medium to another computer-readable storage medium. For example, the computer programs or the instructions may be transmitted from one network device, terminal, computer, server, or data center to another network device, terminal, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise specified or there is a logic conflict, terms and/or descriptions in different embodiments are consistent and may be referenced by each other. Technical features in different embodiments may be combined to form a new embodiment based on an internal logical relationship.

In addition, it should be understood that, the term "for example" in embodiments of this application is used to represent an example, an illustration, or a description. Any embodiment or design scheme described as an "example" in this application should not be construed as being more preferable or advantageous than other embodiments or design schemes. Exactly, the term "for example" is intended to present a concept in a specific manner.

It may be understood that, various numbers in embodiments of this application are merely used for differentiation for ease of descriptions, and are not used to limit the scope of embodiments of this application. Sequence numbers of the foregoing processes do not mean an execution sequence, and the execution sequence of the processes should be determined based on functions and internal logic of the processes.

## Claims

1. A homomorphic task management method, comprising:
receiving a homomorphic task request, wherein the homomorphic task request comprises a homomorphic task output type; and
sending one or more pieces of task configuration information to N homomorphic enabling units based on the homomorphic task request, wherein each piece of task configuration information comprises one or more homomorphic task participant types of at least one of the N homomorphic enabling units; the homomorphic task participant type comprises any one of a homomorphic encryption party, a homomorphic computation party, or a homomorphic decryption party; and the N homomorphic enabling units are configured to implement a homomorphic task corresponding to the homomorphic task output type, wherein N is an integer greater than or equal to 1.

2. The method according to claim 1, wherein task configuration information sent to at least one of the N homomorphic enabling units serving as a homomorphic computation party further comprises a homomorphic computation algorithm identifier and a homomorphic encryption algorithm identifier, and the homomorphic computing algorithm identifier is determined based on the homomorphic task output type.

3. The method according to claim 1 or 2, wherein before sending the one or more pieces of task configuration information to the N homomorphic enabling units, the method further comprises:
selecting, based on homomorphic capability information of M homomorphic enabling units and the homomorphic task request, the N homomorphic enabling units from the M homomorphic enabling units, wherein M is an integer greater than or equal to N, wherein
homomorphic capability information of any one of the M homomorphic enabling units comprises a homomorphic encryption algorithm identifier and/or a homomorphic computation algorithm identifier supported by the homomorphic enabling unit.

4. The method according to claim 3, wherein the M homomorphic enabling units comprise a first homomorphic enabling unit, and the method further comprises:
receiving homomorphic capability information from the first homomorphic enabling unit; and
generating a homomorphic capability profile of the first homomorphic enabling unit based on the homomorphic capability information of the first homomorphic enabling unit.

5. The method according to claim 4, wherein before receiving the homomorphic capability information from the first homomorphic enabling unit, the method further comprises:
sending a homomorphic capability information reporting request to the first homomorphic enabling unit, wherein the homomorphic capability information reporting request is used for requesting the homomorphic capability information of the first homomorphic enabling unit.

6. The method according to any one of claims 3 to 5, wherein the homomorphic capability information of the homomorphic enabling unit further comprises one or more of the following:
an identifier, a type, a homomorphic encryption capability level, a homomorphic encryption security level, a homomorphic encryption enabling identifier, a homomorphic decryption enabling identifier, and a homomorphic computation enabling identifier of the homomorphic enabling unit.

7. The method according to any one of claims 1 to 6, wherein the homomorphic task request further comprises one or more of the following:
a homomorphic task type, a homomorphic task quality requirement, a data user parameter, a quantity of data users, a quantity of data providers, and a data provider parameter.

8. The method according to any one of claims 1 to 7, wherein the homomorphic enabling unit comprises:
a terminal device, an access network device, a core network element, an independent node, or an application layer function node.

9. The method according to any one of claims 1 to 8, wherein the method further comprises:
generating a homomorphic task profile based on the homomorphic task request and the one or more pieces of task configuration information.

10. The method according to any one of claims 1 to 9, wherein the method further comprises:
forwarding or broadcasting the homomorphic task request to at least one second homomorphic task management unit.

11. The method according to any one of claims 1 to 10, wherein the method further comprises:
sending a homomorphic task key request to a key management unit, wherein the homomorphic task key request is used for requesting to deliver a homomorphic task key to the at least one of the N homomorphic enabling units, and the homomorphic task key request comprises one or more homomorphic task participant types of each of the N homomorphic enabling units and a homomorphic encryption algorithm identifier used in the homomorphic task.

12. The method according to any one of claims 1 to 11, wherein the method further comprises:
sending ciphertext sending task configuration information to a ciphertext data storage management unit, wherein the ciphertext sending task configuration information comprises a ciphertext data identifier and an identifier of the at least one homomorphic enabling unit serving as the homomorphic computation party, to enable the ciphertext data storage management unit to send a stored ciphertext corresponding to the ciphertext data identifier to the at least one homomorphic enabling unit serving as the homomorphic computation party, wherein the ciphertext data identifier identifies a ciphertext needed by the homomorphic task.

13. The method according to claim 12, wherein the ciphertext is a symmetric ciphertext, an asymmetric ciphertext, or a homomorphic ciphertext.

14. The method according to claim 12 or 13, wherein the method further comprises:
sending a ciphertext query request to the ciphertext data storage management unit, wherein the ciphertext query request is used for requesting to query for validity of the ciphertext; and
receiving a ciphertext query response from the ciphertext data storage management unit, wherein the ciphertext query response comprises whether the ciphertext is valid, and that the ciphertext is valid comprises that a storage lifecycle of the ciphertext has not expired and/or a key corresponding to the ciphertext has not expired; and
before sending the one or more pieces of task configuration information to the N homomorphic enabling units, or before sending the ciphertext sending task configuration information to the ciphertext data storage management unit, the method further comprises:
determining that the ciphertext is valid.

15. A key management method, comprising:
receiving a homomorphic task key request from a homomorphic task management unit, wherein the homomorphic task key request is used for requesting to deliver a homomorphic task key to at least one of N homomorphic enabling units; the homomorphic task request comprises one or more homomorphic task participant types of each of the N homomorphic enabling units participating in a homomorphic task and a homomorphic encryption algorithm identifier used in the homomorphic task; and the homomorphic task participant type comprises any one of a homomorphic encryption party, a homomorphic computation party, or a homomorphic decryption party, wherein N is an integer greater than or equal to 1; and
sending a homomorphic encryption key to at least one of the N homomorphic enabling units serving as a homomorphic encryption party, sending a homomorphic computation key to at least one of the N homomorphic enabling units serving as a homomorphic computation party, and sending a homomorphic decryption key to at least one of the N homomorphic enabling units serving as a homomorphic decryption party, wherein the homomorphic encryption key, the homomorphic computation key, and the homomorphic decryption key are derived based on a key generator corresponding to the homomorphic encryption algorithm identifier.

16. The method according to claim 15, wherein the method further comprises:
sending a homomorphic task key derivation request to a key exchange party, wherein the homomorphic task key derivation request comprises an identifier of at least one homomorphic enabling unit participating in the homomorphic task, a public parameter used for deriving a homomorphic task key, and the homomorphic encryption algorithm identifier; and
receiving a homomorphic task key from the key exchange party, wherein the homomorphic task key comprises the homomorphic encryption key, the homomorphic computation key, and the homomorphic decryption key, and the homomorphic task key is derived by the key exchange party based on a key material associated with the at least one homomorphic enabling unit participating in the homomorphic task, the public parameter, and the key generator corresponding to the homomorphic encryption algorithm identifier.

17. The method according to claim 15, wherein the method further comprises:
sending a key information obtaining request to the key exchange party, wherein the key information obtaining request comprises the identifier of the at least one homomorphic enabling unit participating in the homomorphic task;
receiving key information from the key exchange party, wherein the key information comprises the key material of the at least one homomorphic enabling unit participating in the homomorphic task; and
deriving the homomorphic task key based on the key information, a public parameter used for deriving a homomorphic task key, and the key generator corresponding to the homomorphic encryption algorithm identifier, wherein the homomorphic task key comprises the homomorphic encryption key, the homomorphic computation key, and the homomorphic decryption key.

18. A key management method, comprising:
receiving a homomorphic task key request from a homomorphic task management unit, wherein the homomorphic task key request is used for requesting to deliver a homomorphic task key to at least one of N homomorphic enabling units; the homomorphic task request comprises one or more homomorphic task participant types of each of the N homomorphic enabling units participating in a homomorphic task and a homomorphic encryption algorithm identifier used in the homomorphic task; and the homomorphic task participant type comprises any one of a homomorphic encryption party, a homomorphic computation party, or a homomorphic decryption party, wherein N is an integer greater than or equal to 1; and
when at least one of the N homomorphic enabling units serving as an encryption party uses non-homomorphic encryption, sending a homomorphic encryption key and a homomorphic computation key to at least one of the N homomorphic enabling units serving as a homomorphic computation party, and sending a homomorphic decryption key to at least one of the N homomorphic enabling units serving as a decryption party, wherein the homomorphic computation key comprises a first switching key; the first switching key is a homomorphic ciphertext obtained by performing homomorphic encryption on a non-homomorphic decryption key corresponding to a non-homomorphic ciphertext, and is used by the at least one homomorphic enabling unit serving as the homomorphic computation party to perform homomorphic computation and non-homomorphic decryption on a ciphertext obtained by performing homomorphic encryption again on the non-homomorphic ciphertext by using the homomorphic encryption key, to obtain the homomorphic ciphertext; and the homomorphic encryption key, the homomorphic computation key, and the homomorphic decryption key are derived based on a key generator corresponding to the homomorphic encryption algorithm identifier, wherein
the non-homomorphic encryption comprises symmetric encryption or asymmetric encryption that does not support a homomorphic feature, the non-homomorphic decryption comprises symmetric decryption or asymmetric decryption that does not support a homomorphic feature, and the non-homomorphic ciphertext is a ciphertext obtained through the non-homomorphic encryption.

19. The method according to claim 18, wherein the method further comprises:
obtaining, by using a key exchange party, a non-homomorphic decryption key corresponding to the non-homomorphic encryption; and
deriving the homomorphic task key based on the non-homomorphic decryption key, a public parameter used for deriving the homomorphic task key, and the key generator corresponding to the homomorphic encryption algorithm identifier, wherein the homomorphic task key comprises the homomorphic encryption key, the homomorphic computation key, and the homomorphic decryption key.

20. A key management method, comprising:
receiving a homomorphic task key request from a homomorphic task management unit, wherein the homomorphic task key request is used for requesting to deliver a homomorphic task key to at least one of N homomorphic enabling units; the homomorphic task request comprises one or more homomorphic task participant types of each of the N homomorphic enabling units participating in a homomorphic task and a homomorphic encryption algorithm identifier used in the homomorphic task; and the homomorphic task participant type comprises any one of a homomorphic encryption party, a homomorphic computation party, or a homomorphic decryption party, wherein N is an integer greater than or equal to 1; and
when at least one of the N homomorphic enabling units serving as an encryption party uses non-homomorphic encryption, and at least one of the N homomorphic enabling units serving as a decryption party uses non-homomorphic decryption, sending a homomorphic encryption key, a homomorphic computation key, and a second switching key to at least one of the N homomorphic enabling units serving as a homomorphic computation party, wherein the homomorphic computation key comprises a first switching key; the first switching key is a homomorphic ciphertext obtained by performing homomorphic encryption on a non-homomorphic decryption key corresponding to a non-homomorphic ciphertext, and is used by the at least one homomorphic enabling unit serving as the homomorphic computation party to perform homomorphic computation and non-homomorphic decryption on a ciphertext obtained by performing homomorphic encryption again on the non-homomorphic ciphertext by using the homomorphic encryption key, to obtain the homomorphic ciphertext; the second switching key is used by the at least one homomorphic enabling unit serving as the homomorphic computation party to switch a homomorphic ciphertext obtained through homomorphic computation to a non-homomorphic ciphertext obtained through the non-homomorphic encryption; and the homomorphic encryption key, the homomorphic computation key, and the second switching key are derived based on a key generator corresponding to the homomorphic encryption algorithm identifier, wherein
the non-homomorphic encryption comprises symmetric encryption or asymmetric encryption that does not support a homomorphic feature, the non-homomorphic decryption comprises symmetric decryption or asymmetric decryption that does not support a homomorphic feature, and the non-homomorphic ciphertext is a ciphertext obtained through the non-homomorphic encryption.

21. The method according to claim 20, wherein the non-homomorphic decryption key is sent to the at least one homomorphic enabling unit serving as the decryption party.

22. The method according to claim 20 or 21, wherein the method further comprises:
obtaining, by using a key exchange party, a non-homomorphic encryption key and a non-homomorphic decryption key corresponding to the non-homomorphic encryption; and
deriving the homomorphic task key based on the non-homomorphic encryption key, the non-homomorphic decryption key, a public parameter used for deriving the homomorphic task key, and the key generator corresponding to the homomorphic encryption algorithm identifier, wherein the homomorphic task key comprises the homomorphic encryption key, the homomorphic computation key, and the second switching key.

23. The method according to any one of claims 15 to 22, wherein the homomorphic task key is derived and delivered based on a granularity of the homomorphic task key, and the granularity of the homomorphic task key is determined through agreement with the key exchange party.

24. The method according to claim 23, wherein the granularity of the homomorphic task key is a task level, a user level, or a sub-domain level.

25. A ciphertext storage management method, comprising:
receiving ciphertext sending task configuration information from a homomorphic task management unit, wherein the ciphertext sending task configuration information comprises a ciphertext data identifier and an identifier of at least one homomorphic enabling unit serving as a homomorphic computation party; and
sending, based on the ciphertext sending task configuration information, a stored ciphertext corresponding to the ciphertext data identifier to the at least one homomorphic enabling unit serving as the homomorphic computation party.

26. The method according to claim 25, wherein the ciphertext is a symmetric ciphertext, an asymmetric ciphertext, or a homomorphic ciphertext.

27. The method according to claim 25 or 26, wherein the method further comprises:
receiving a ciphertext query request from the homomorphic task management unit, wherein the ciphertext query request is used for requesting to query for validity of the ciphertext; and
sending a ciphertext query response to the homomorphic task management unit, wherein the ciphertext query response comprises whether the ciphertext is valid, and that the ciphertext is valid comprises that a storage lifecycle of the ciphertext has not ended and/or an encryption key corresponding to the ciphertext has not expired.

28. The method according to any one of claims 25 to 27, wherein the ciphertext from a second homomorphic enabling unit, and the method further comprises:
receiving the ciphertext from the second homomorphic enabling unit and a storage lifecycle; and
storing the ciphertext based on the storage lifecycle.

29. The method according to any one of claims 25 to 27, wherein the ciphertext comprises a ciphertext from a second homomorphic enabling unit, and the method further comprises:
receiving the ciphertext from the second homomorphic enabling unit;
setting a storage lifecycle of the ciphertext when a permission for setting the storage lifecycle of the ciphertext is obtained from the second homomorphic enabling unit; and
storing the ciphertext based on the storage lifecycle.

30. The method according to any one of claims 25 to 29, wherein the stored ciphertext from the homomorphic enabling unit comprises a ciphertext encrypted by using a first encryption key, and the method further comprises:
receiving indication information from a key management unit, wherein the indication information indicates that the first encryption key is leaked or invalid; and
deleting the ciphertext encrypted by using the first encryption key.

31. The method according to any one of claims 25 to 30, wherein a storage domain for storing the ciphertext from the homomorphic enabling unit is divided based on one or more of the following:
a homomorphic enabling unit to which the ciphertext belongs, an encryption key corresponding to the ciphertext, a network layer associated with the ciphertext, a network slice type associated with the ciphertext, and a security context associated with the ciphertext.

32. A communication apparatus, comprising an interface unit and a processing unit, wherein
the interface unit is configured to receive and send data; and
the processing unit is configured to perform the method according to any one of claims 1 to 31 by using the interface unit.

33. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement the method according to any one of claims 1 to 31 by using a logic circuit or executing instructions.

34. A computer program product, comprising a computer program or instructions, wherein when the computer program or the instructions are executed by a processor, the method according to any one of claims 1 to 31 is implemented.

35. A chip system, wherein the chip system comprises a processor, the processor is configured to be coupled to a memory, the memory is configured to store a computer program or instructions, and when the computer program or the instructions are executed by the processor, the method according to any one of claims 1 to 31 is implemented.

36. A computer-readable storage medium, wherein the storage medium stores a computer program or instructions, and when the computer program or the instructions are executed, the method according to any one of claims 1 to 31 is implemented.

37. A communication system, wherein the communication system comprises a homomorphic task management unit and at least one homomorphic enabling unit that communicates with the homomorphic task management function network element; and
the homomorphic task management unit is configured to implement the method according to any one of claims 1 to 14.

38. The communication system according to claim 37, wherein the communication system further comprises: a key management unit and/or a ciphertext data storage management unit, wherein
the key management unit is configured to implement the method according to any one of claims 15 to 24; and
the ciphertext data storage management unit is configured to implement the method according to any one of claims 25 to 31.
